# EUROPEAN PATENT APPLICATION

(11) **EP 1 681 810 A1**
(43) Date of publication of application: **19.07.2006**
(21) Application number: 04706319.3
(22) Date of filing: 29.01.2004
(51) Int. Cl.: H04L 12/42

(54) **DATA TRANSMISSION SYSTEM, DATA TRANSMITTER, AND TRANSMITTING METHOD**

(30) Priority: 17.10.2003 JP 2003358324
(71) Applicant: MATSUSHITA ELECTRIC INDUSTRIAL CO., LTD., Kadoma-shi, Osaka 571-8501 (JP)
(72) Inventor: AKITA, Takashi, Osaka-shi, Osaka 532-0022 (JP); KATTA, Noboru, Kawasaki-shi, Kanagawa 216-0005 (JP); YASUI, Nobuhiko, Moriguchi-shi, Osaka 570-0017 (JP); SAKAI, Takahisa, Yokohama-shi, Kanagawa 224-0003 (JP); MIZUGUCHI, Yuji, Hirakata-shi, Osaka 573-0162 (JP); TAKAHIRA, Yutaka, Neyagawa-shi, Osaka 572-0083 (JP); KAWADA, Hirotsugu, Osaka-shi, Osaka 543-0043 (JP); UMEI, Toshitomo, Settsu-shi, Osaka 566-0033 (JP)
(74) Representative: Pautex Schneider, Nicole Véronique
(86) International application number: PCT/JP2004/000833
(87) International publication number: WO 2005/039121

(57) **Abstract**

In the case where transmission and reception is made impossible at a certain portion, a data transmission system configured in a ring LAN performs an initialization process for a physical layer (a transmission/reception section 4) repeatedly, thereby setting as a master a data transmission device which is located most upstream in electrical communication from a disconnection point. With that data transmission device being the master, an initial setting of the physical layer such as a clock synchronization with another data transmission device or the like is established, and an initialization process for a data link layer is performed, whereby subsequent data transmission and reception is enabled. That is, the data transmission system configured in a ring LAN is able to perform communication using transmission lines excluding a damaged point even in the case where transmission and reception is made impossible at a certain portion.

## Description

### TECHNICAL FIELD

The present invention relates to a data transmission system, a data transmission device, and a method therefor, and, more specifically, to a data transmission system, a data transmission device, and a method therefor for performing unidirectional electric communication between data transmission devices after establishing synchronization therebetween, the data transmission devices being connected with one another so as to form a ring structure via transmission lines.

### BACKGROUND ART

In recent years, in car navigation or when doing the Internet, e.g., ITS (Intelligent Transport Systems), or when transmitting image information in space such as the inside of a motor vehicle, high-volume and high-speed communication is required. A great deal of study is being made on communication systems for transmitting such digitized video or audio data, or digital data such as computer data or the like. Also, introduction of a network for transmitting digital data into even space such as the inside of a motor vehicle is becoming more and more widespread. For example, this intra-vehicle network uses a ring topology as its physical topology, and connects a plurality of nodes with the ring topology to form a unidirectional ring LAN, thus aiming to achieve integrated connection of an audio device, a navigation device, an information terminal device, or the like. For example, Media Oriented Systems Transport (hereinafter referred to as "MOST") is used for the aforementioned ring LAN as an information communications protocol. The MOST refers to not only the communications protocol but also a method for constructing a distributed system. Data on a MOST network is transmitted with a frame being a basic unit, and frames are sequentially transmitted between the nodes in a single direction.

Noticeably, in the case of a ring LAN provided in the inside of a vehicle or the like, radiated noise may cause malfunction of another electronic device disposed on a motor vehicle or the like; besides, there is a necessity to perform accurate transmission without receiving any influence of radiated noise from another device. For this reason, in a ring LAN using a conventional MOST, each node is connected by use of an optical-fiber cable, whereby protection from noise is improved while preventing generation of electromagnetic waves. Meanwhile, according to the disclosure of International Publication Pamphlet No. 02/30079, electric communication is performed using inexpensive cables such as twisted-pair cables or coaxial cables, while data transmission at high speed exceeding 20Mbps is realized with merely a little radiated noise and improved protection from noise.

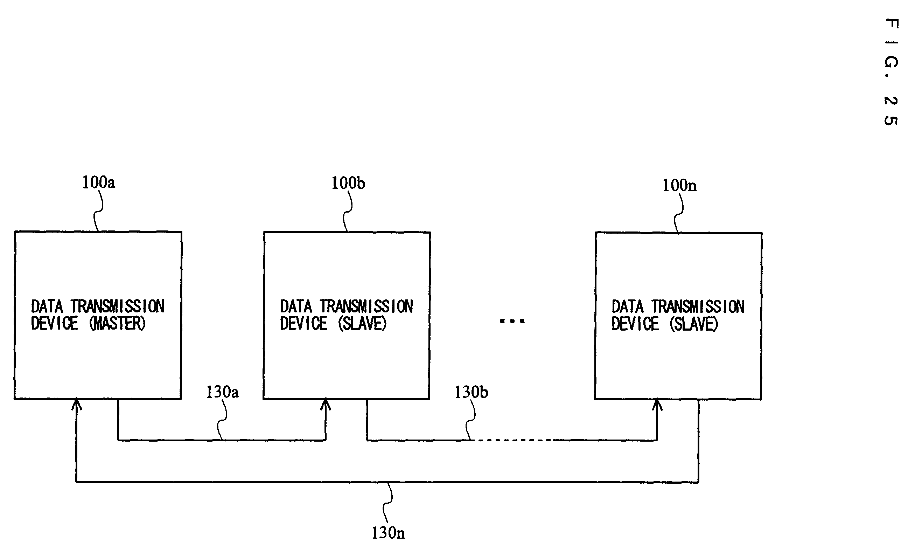

With reference to FIG. 25, a ring network where nodes are connected with inexpensive cables is described. FIG. 25 is a block diagram illustrating a configuration of the ring network.

In FIG. 25, the ring network is composed of n data transmission devices 100a to 100n in which each node performs data transmission and reception. To the data transmission devices are connected connected-devices (not shown) each of which performs a process based on data transmitted by the data transmission device and outputs the result to the data transmission device. The data transmission devices 100a to 100n are connected via transmission lines 130a to 130n composed of coaxial cables or twisted-pair cables so as to form a ring structure. Each of the data transmission devices 100a to 100n has the same structure, and includes a transmission section and a reception section (which are not shown). For example, the transmission section provided in the data transmission device 100a outputs data to the reception section provided in the data transmission device 100b via the transmission line 130a; and the reception section provided in the data transmission device 100a receives data from the transmission section provided in the data transmission device 100n via the transmission line 130n.

A data transmission method in which the devices 100a to 100n conduct output to the transmission lines 130a to 130n is described. A digital data sequence from the connected-device or the like connected to each one of the data transmission devices 100a to 100n is divided by the respective transmission section into units of a predetermined number of bits to obtain data symbols, which are converted through mapping by use of a conversion table and a filtering process into an analog signal, which in turn is outputted to a corresponding one of the transmission lines 130a to 130n. The analog signal is outputted as a waveform in which mapped signal levels are in a predetermined cycle. Then, the reception section of each of the data transmission devices 100a to 100n receives the analog signal, which is decoded through a filtering process and inverse mapping into data symbols, which in turn are converted into a digital data sequence.

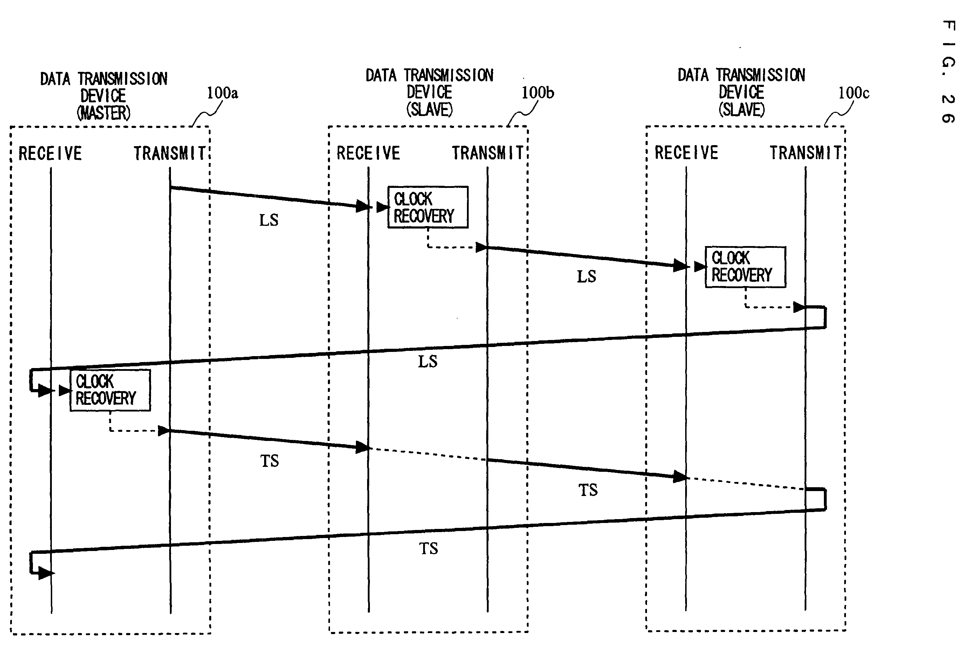

In the ring network so structured, initialization operation is performed on a physical layer of a protocol to define mechanical connection, and in this initialization operation, clock synchronization between the data transmission devices is established and the setting of determination levels serving as reference for data determination is performed. With reference to FIG. 26, the initialization operation in the ring network is described below. FIG. 26 illustrates an initialization operation sequence in the ring network, which is embodied herein by a ring network constituted by three data transmission devices 100a to lOOc.

In FIG. 26, the data transmission device 100a is a master, which transmits data with its own clock, and the other data transmission devices 100b and 100c are slaves, which establish clock synchronization by use of a lock signal LS for establishing clock synchronization received from the master. First, at power-on, the master data transmission device 100 a performs locking to its own clock, and thereafter, based on its own clock, sends the aforementioned lock signal LS to the data transmission device 100b. After performing clock recovery by using the received lock signal LS and locking the frequency to establish clock synchronization, the slave data transmission device 100b sends the lock signal LS to the data transmission device 100c connected downstream thereof. Similarly, after performing clock recovery by using the received lock signal LS and locking the frequency to establish clock synchronization, the slave data transmission device 100c sends the lock signal LS to the master data transmission device 100a. Then, the master data transmission device 100a performs clock recovery by using the received lock signal LS and locks the frequency again to establish clock synchronization, thereby establishing clock synchronization throughout the network.

After clock synchronization is established throughout the network, the master data transmission device 100a sends, to the data transmission device 100b, a start signal TS, which indicates the start timing of data communication and is capable of performing the setting of the determination levels serving as reference for data determination. While performing the setting of the determination levels for the data transmission device 100a by using the received start signal TS, the slave data transmission device 100b sends to the data transmission device 100c a start signal TS of its own. Similarly, while performing the setting of the determination levels for the data transmission device 100b by using the received start signal TS, the slave data transmission device 100c sends to the data transmission device 100a a start signal TS of its own. Then, the master data transmission device 100a performs the setting of the determination levels for the data transmission device 100c by using the received start signal TS, whereby the determination levels are set throughout the network, and the initialization of the ring network is completed. Once the initialization of the ring network is completed, the data transmission devices 100a to 100c perform data communication via the network.

### DISCLOSURE OF THE INVENTION

However, if a disconnection occurs at a portion of the transmission lines 130a to 130n included in the above-described ring network, or if one of the data transmission devices 100a to 100n becomes incapable of data transmission or reception because of damage or the like, the lock signal LS outputted from each of the data transmission devices 100a to 100n cannot be sent beyond the damaged portion. In other words, neither the establishment of clock synchronization throughout the network nor the setting of the determination levels is achieved, and therefore the above-described initialization operation is not completed successfully, thus preventing each of the data transmission devices 100a to 100n from performing data communication. Thus, in the case where the above-described problem has arisen, each of the connected-devices connected to the network is stopped from performing a function realized by communicating with another connected-device, and also it is difficult to detect the portion where the problem has arisen.

Therefore, an object of the present invention is to provide a data transmission system, a data transmission device, and a method therefor, for, even in the case where a portion of the devices or transmission lines constituting a ring network is made incapable of communication, allowing the entire network to be capable of communication instead of remaining incapable of communication, and, further, detecting the damaged portion and enabling communication using the part excluding the damaged portion.

In order to achieve the above object, the present invention has features as described below.

A data transmission system according to the present invention includes a plurality of data transmission devices which are connected via a transmission line so as to form a ring structure, and each of the data transmission devices establishes clock synchronization and performs unidirectional electrical communication. Each of the data transmission devices includes:
a processing section for processing data received and to be transmitted based on a predetermined communications protocol; a transmission/reception section for outputting data received from a previous data transmission device to the processing section and
transmitting a processing result from the processing section to a subsequent data transmission device; a control section for setting the device as a master, which sends a signal synchronizing with a held reference clock to the subsequent data transmission device, or as a slave, which establishes clock synchronization using a signal received from the previous data transmission device and sends a signal to the subsequent data transmission device; lock signal sending means for sending a lock signal in an initial operation; clock synchronization means for receiving the lock signal sent by the previous data transmission device and
establishing the clock synchronization; start signal sending means for sending a start signal that indicates a data communication start timing; start signal commencement timing generation means for, when the device is set as the master, outputting to the start signal sending means a start signal sending commencement signal indicating a timing at which to send the start signal, after a predetermined time period elapses after the lock signal sending means sends the lock signal; and a signal detection section for detecting whether a signal has been received from the previous data transmission device. When the device is set as the master, the lock signal sending means sends to the subsequent data transmission device the lock signal synchronizing with the held reference clock, and when the device is set as the slave, the lock signal sending means receives the lock signal sent by the previous data transmission device to establish clock synchronization, and, after establishing the clock synchronization, sends the lock signal further to the subsequent data transmission device. When the device is set as the master, the start signal sending means receives the start signal sending commencement signal from the start signal commencement timing generation means and there after sends the start signal to the subsequent data transmission device, and when the device is set as the slave, the start signal sending means sends the start signal to the subsequent data transmission device in response to reception of the start signal sent from the previous data transmission device. Thus, each of the data transmission devices performs initialization.

The control section may set the device as a master or a slave based on a presence or absence of a signal detection in the signal detection section. Thus, when there is a portion where the electrical communication is impossible, a data transmission device located most upstream in the electrical communication from the portion is set as the master. Further, when the device is set as the master in the initial operation, the control section may cause the lock signal sending means to send the lock signal and, after recognizing that the signal detection section has not detected a signal from the previous data transmission device within a predetermined time period, set the device as a slave if the signal detection section of the device detects a signal from the previous data transmission device and set the device as a master if the signal detection section of the device does not detect a signal from the previous data transmission device; and when the.device is set as the slave in the initial operation, the control section may set the device as a slave if the signal detection section of the device detects a signal from the previous data transmission device and set the device as a master if the signal detection section of the device does not detect a signal from the previous data transmission device.

The control section may include: first shifting means for, when the device is set as the master in the initial operation, causing the lock signal sending means to send the lock signal and, in response to the signal detection section not detecting a signal from the previous data transmission device within a predetermined time period, setting the device as the master and performing shift to a first diag mode; second shifting means for, when the device is set as the slave in the initial operation, setting the device as the master and performing the shift to the first diag mode in response to the signal detection section not detecting a signal from the previous data transmission device within a predetermined time period; third shifting means for, when the device is set as the slave in the initial operation, setting the device as the slave and performing the shift to the first diag mode in response to the signal detection section detecting a signal from the previous data transmission device within a predetermined time period; fourth shifting means for, when the device is set as the master in the first diag mode, causing the lock signal sending means to send the lock signal and, in response to the signal detection section detecting a signal from the previous data transmission device during the first diag mode, setting the device as the slave and performing shift to a second diag mode; fifth shifting means for, when the device is set as the master in the first diag mode, causing the lock signal sending means to send the lock signal and, in response to the signal detection section not detecting a signal from the previous data transmission device, setting the device as the master and performing the shift to the second diag mode; and sixth shifting means for, when the device is set as the slave in the first diag mode, setting the device as the slave and performing the shift to the second diag mode. In this case, in the second diag mode, when the device is set as the master, the lock signal sending means sends to the subsequent data transmission device the lock signal synchronizing with the held reference clock, and when the device is set as the slave, the lock signal sending means receives the lock signal sent by the previous data transmission device and establishes clock synchronization and, after establishing the clock synchronization, sends the lock signal further to the subsequent data transmission device. Then, when the device is set as the master, the start signal sending means receives the start signal sending commencement signal from the start signal commencement timing generation means and the reaftersends the start signal to the subsequent data transmission device, and when the device is set as the slave, the start signal sending means sends the start signal to the subsequent data transmission device in response to reception of the start signal sent from the previous data transmission device. The control section may further include: seventh shifting means for, when the device is set as the master in the initial operation, causing the lock signal sending means to send the lock signal and, in response to the signal detection section detecting a signal from the previous data transmission device within a predetermined time period, setting the device as the master and performing shift to a third diag mode; and eighth shifting means for, when the device is set as the master in the third diag mode, causing the lock signal sending means to send the lock signal, setting the device as the master, and performing the shift to the second diag mode.

As a first example, the signal detection section performs signal detection based on a presence or absence of the lock signal received from the previous data transmission device. As a second example, the signal detection section performs signal detection based on a presence or absence of establishment of the clock synchronization in the device. As a third example, the signal detection section performs signal detection based on a presence or absence of the start signal received from the previous data transmission device.

The communications protocol used by the processing section may be defined by MOST.

Also, the processing section may include count means for counting a number of positional stages in relation to the data transmission device which is set as the master.

In a data transmission method according to the present invention, a plurality of nodes are connected via a transmission line so as to form a ring structure, and each of the nodes establishes clock synchronization using a predetermined communications protocol and performs unidirectional electrical communication. The data transmission method includes a step for setting one of the plurality of nodes as a master, which holds a reference clock, and setting another node as a slave; a first lock signal sending step for, when the node is set as the master, sending to a subsequent node a lock signal synchronizing with the reference clock; a clock synchronization step for establishing the clock synchronization using the lock signal sent from a previous node; a second lock signal sending step for the node which is set as the slave establishing the clock synchronization and thereafter sending the lock signal to the subsequent node; and a start signal sending step for sending, from the node, a start signal that indicates a data communication start timing. The setting step, the first lock signal sending step, the clock synchronization step, the second lock signal sending step, and the start signal sending step are performed in an initial operation. The node which is set as the master performs the start signal sending step after a predetermined time period elapses after the first lock signal sending step is performed, and the node which is set as the slave performs the start signal sending step in response to reception of the start signal from the previous node. Thus, each of the nodes performs initialization.

The data transmission method may further include a resetting step for resetting the node as the master or slave based on a presence or absence of a signal received from the previous node. Thus, when there is a portion where the electrical communication is impossible, a node located most upstream in the electrical communication from the portion is finally set as the master, and clock synchronization with another node is established. Also, the resetting step may cause the first lock signal sending step to be performed in the initial operation, and may include: a step for, after it is recognized that the node which has been set as the master in the initial operation has not detected a signal from the previous node within a predetermined time period, setting as a slave a node which has detected a signal from the previous node, and setting as a master a node which has not detected a signal from the previous node; and a step, performed by the node which has been set as the slave in the initial operation, for setting as a slave a node which has detected a signal from the previous node, and setting as a master a node which has not detected a signal from the previous node.

The resetting step may include: a first shifting step performed after the first lock signal sending step is performed, for, in response to the node which has been set as the master not detecting a signal from the previous node within a predetermined time period, setting the node as the master and performing shift to a first diag mode; a second shifting step for setting, of nodes which have been set as slaves, a node which has not detected a signal from the previous node within a predetermined time period as the master and performing the shift to the first diag mode; a third shifting step for setting, of the nodes which have been set as slaves, a node which has detected a signal from the previous node within the predetermined time period as the slave and performing the shift to the first diag mode; a step, performed by the node which has been set as the master, for sending the lock signal to the subsequent node; a fourth shifting step for setting, of nodes which have been set as the master, a node which has detected a signal from the previous node as the slave and performing shift to a second diag mode; a fifth shifting step for setting, of the nodes which have been set as the master, a node which has not detected a signal from the previous node as the master and performing the shift to the second diag mode; and a sixth shifting step for setting the node which has been set as the slave as the slave and performing the shift to the second diag mode. The first shifting step, the second shifting step, and the third shifting step are performed in the initial operation, and the step of sending the lock signal, the fourth shifting step, the fifth shifting step, and the sixth shifting step are performed in the first diag mode. In this case, in the second diag mode, the first lock signal sending step, the clock synchronization step, and the second lock signal sending step are performed; the node which has been set as the master performs the start signal sending step after a predetermined time period elapses after the first lock signal sending step is performed; and the node which has been set as the slave performs the start signal sending step in response to reception of the start signal from the previous node. The resetting step may further include: a seventh shifting step, performed in the initial operation after the first lock signal sending step is performed, for, in response to the node which has been set as the master detecting a signal from the previous node within a predetermined time period, setting the node as the master and performing shift to a third diag mode; and an eighth shifting step, performed in the third diag mode by the node which has been set as the master, for sending the lock signal to the subsequent node, setting the node as the master, and performing the shift to the second diag mode.

As a first example, the resetting step resets a node as the master or slave based on a presence or absence of detection of the lock signal received from the previous node. As a second example, the resetting step resets a node as the master or slave based on a presence or absence of establishment of the clock synchronization in the node. As a third example, the resetting step resets a node as the master or slave based on a presence or absence of detection of the start signal received from the previous node.

The communications protocol used by the nodes may be defined by MOST.

Also, the data transmission method may include a step for counting a number of positional stages in relation to the node which is set as the master, with respect to each of the nodes.

A data transmission device according to the present invention is to be connected to a ring-shaped data transmission system, and establishes clock synchronization with another device and performs unidirectional electrical communication via a transmission line. The data transmission device includes: a processing section for processing data received and to be transmitted based on a predetermined communications protocol; a transmission/reception section for outputting data received from a previous device to the processing section and transmitting a processing result from the processing section to a subsequent device; a control section for setting the device as a master, which sends a signal synchronizing with a held reference clock to the subsequent device, or as a slave, which establishes clock synchronization using a signal received from the previous device and sends a signal to the subsequent device; lock signal sending means for sending a lock signal in an initial operation; clock synchronization means for receiving the lock signal sent by the previous device and establishing the clock synchronization; start signal sending means for sending a start signal that indicates a data communication start timing; start signal commencement timing generation means for, when the device is set as the master, outputting to the start signal sending means a start signal sending commencement signal indicating a timing at which to send the start signal, after a predetermined time period elapses after the lock signal sending means sends the lock signal; and a signal detection section for detecting whether a signal has been received from the previous device. When the device is set as the master, the lock signal sending means sends to the subsequent device the lock signal synchronizing with the held reference clock, and when the device is set as the slave, the lock signal sending means receives the lock signal sent by the previous device to establish clock synchronization, and, after establishing the clock synchronization, sends the lock signal further to the subsequent device. When the device is set as the master, the start signal sendingmeans receives the start signal sending commencement signal from the start signal commencement timing generation means and thereafter sends the start signal to the subsequent device, and when the device is set as the slave, the start signal sending means sends the start signal to the subsequent device in response to reception of the start signal sent from the previous device.

The control section may set the device as a master or a slave based on a presence or absence of a signal detection in the signal detection section. Thus, if there is a portion where the electrical communication is impossible in the data transmission system, and the device is located most upstream in the electrical communication from the portion, the device is set as the master. Also, when the device is set as the master in the initial operation, the control section may cause the lock signal sending means to send the lock signal and, after recognizing that the signal detection section has not detected a signal from the previous device within a predetermined time period, set the device as a slave if the signal detection section of the device detects a signal from the previous device and set the device as a master if the signal detection section of the device does not detect a signal from the previous device; and when the device is set as the slave in the initial operation, the control section may set the device as a slave if the signal detection section of the device detects a signal from the previous device and set the device as a master if the signal detection section of the device does not detect a signal from the previous device.

The control section may include: first shifting means for, when the device is set as the master in the initial operation, causing the lock signal sending means to send the lock signal and, in response to the signal detection section not detecting a signal from the previous device within a predetermined time period, setting the device as the master and performing shift to a first diag mode; second shifting means for, when the device is set as the slave in the initial operation, setting the device as the master and performing the shift to the first diag mode in response to the signal detection section not detecting a signal from the previous device within a predetermined time period; third shifting means for, when the device is set as the slave in the initial operation, setting the device as the slave and performing the shift to the first diag mode in response to the signal detection section detecting a signal from the previous device within a predetermined time period; fourth shifting means for, when the device is set as the master in the first diag mode, causing the lock signal sending means to send the lock signal and, in response to the signal detection section detecting a signal from the previous device during the first diag mode, setting the device as the slave and performing shift to a second diag mode; fifth shifting means for, when the device is set as the master in the first diag mode, causing the lock signal sending means to send the lock signal and, in response to the signal detection section not detecting a signal from the previous device, setting the device as the master and performing the shift to the second diag mode; and sixth shifting means for, when the device is set as the slave in the first diag mode, setting the device as the slave and performing the shift to the second diag mode. In this case, in the second diag mode, when the device is set as the master, the lock signal sending means sends to the subsequent device the lock signal synchronizing with the held reference clock, and when the device is set as the slave, the lock signal sending means receives the lock signal sent by the previous device and establishes clock synchronization and, after establishing the clock synchronization, sends the lock signal further to the subsequent device. When the device is set as the master, the start signal sending means receives the start signal sending commencement signal from the start signal commencement timing generation means and thereafter sends the start signal to the subsequent device, and when the device is set as the slave, the start signal sending means sends the start signal to the subsequent device in response to reception of the start signal sent from the previous device. The control section may further include: seventh shifting means for, when the device is set as the master in the initial operation, causing the lock signal sending means to send the lock signal and, in response to the signal detection section detecting a signal from the previous device within a predetermined time period, setting the device as the master and performing shift to a third diag mode; and eighth shifting means for, when the device is set as the master in the third diag mode, causing the lock signal sending means to send the lock signal, setting the device as the master, and performing the shift to the second diag mode.

As a first example, the signal detection section performs signal detection based on a presence or absence of the lock signal received from the previous device . As a second example, the signal detection section performs signal detection based on a presence or absence of establishment of the clock synchronization in the device. As a third example, the signal detection section performs signal detection based on a presence or absence of the start signal received from the previous device.

The communications protocol used by the processing section may be defined by MOST.

Even if a plurality of data transmission devices are connected via a transmission line so as to form a ring structure and transmission and reception is made impossible at a certain portion, a data transmission system according to the present invention enables communication between a master and a portion where electrical communication is impossible. In addition, a data transmission device which is located most upstream in electrical communication from the portion, in electrical communication performed in a single direction toward the portion where electrical communication is impossible, can be easily detected based on absence of data reception from the transmission line, and setting that data transmission device as a master makes it possible to communicate with another data transmission device.

Also, the data transmission device which is located most upstream in electrical communication from that portion, in electrical communication performed in a single direction toward the portion where electrical communication is impossible, can be easily detected on a condition that a lock signal is not received from the previous data transmission device, that clock synchronization using the lock signal is not established, that a start signal is not received, or the like.

Also, in the case where a plurality of data transmission devices are connected so as to form a ring structure perform electrical communication using MOST as its communications protocol, even if transmission and reception is made impossible at a certain portion, it is possible to establish clock synchronization using transmission lines excluding the damaged portion.

Also, in the case where counting means is included for counting the number or positional stages in relation to the data transmission device which has been set as the master, if transmission and reception is made impossible at a certain portion, that damaged portion can be easily detected based on the number of positional stages of the data transmission device. Thus, it is made easy to repair that portion where transmission and reception is made impossible in the data transmission system.

Also, the data transmission method and the data transmission device according to the present invention make it possible to achieve an effect similar to that achieved by the above-described data transmission system.

### BRIEF DESCRIPTION OF THE DRAWINGS

FIG. 1 is a block diagram illustrating a configuration of a data transmission system according to a first embodiment of the present invention.
FIG. 2 is a functional block diagram illustrating a structure of a data transmission device 1 in FIG. 1.
FIG. 3 is a flowchart illustrating an initialization operation in the data transmission system according to the first embodiment.
FIG. 4 is a flowchart illustrating a first restart operation in the data transmission system according to first embodiment.
FIG. 5 is a flowchart illustrating a second restart operation of a diag mode in the data transmission system according to the first embodiment.
FIG. 6 is a block diagram for explaining an exemplary case where a disconnection has occurred at a transmission line 80d of the data transmission system according to the first embodiment.
FIG. 7 is a block diagram illustrating a state of the data transmission system of FIG. 6 at the first restart operation of the diag mode.
FIG. 8 is a block diagram illustrating a state of the data transmission system of FIG. 6 at the second restart operation of the diag mode.
FIG. 9 is a flowchart illustrating an initialization operation in a data transmission device 1 which is booted as a master at power-on in a data transmission system according to a second embodiment.
FIG. 10 is a flowchart illustrating an initialization operation in a data transmission device 1 which is booted as a slave at power-on in the data transmission system according to the second embodiment.
FIG. 11 is a subroutine illustrating a detailed operation performed in a master clock synchronization diag process in FIG. 9 and FIG. 10.
FIG. 12 is a subroutine illustrating a detailed operation performed in a master clock synchronization process in FIG. 9 and FIG. 10.
FIG. 13 is a subroutine illustrating a detailed operation performed in a slave clock synchronization process in FIG. 9 and FIG. 10.
FIG. 14 is a subroutine illustrating a detailed operation performed in a master training process in FIG. 9 and FIG. 10.
FIG. 15 is a subroutine illustrating a detailed operation performed in a slave training process in FIG. 9 and FIG. 10.
FIG. 16 is a subroutine illustrating a detailed operation performed in a master training diag process in FIG. 9 and FIG. 10.
FIG. 17 is a block diagram illustrating a state of the data transmission system according to the second embodiment when a master at the time of power-on has been set.
FIG. 18 is a block diagram illustrating a state of the data transmission system of FIG. 17 when a lock signal LS has been sent from the master.
FIG. 19 is a block diagram illustrating a state of the data transmission system of FIG. 17 when masters are set in accordance with a disconnection point.
FIG. 20 is a block diagram illustrating a state when a lock signal LS has been sent from the masters set in FIG. 19.
FIG. 21 is a block diagram illustrating a state of the data transmission system of FIG. 17 when a data transmission device which is located most upstream in electrical communication from the disconnection point has been set as a master.
FIG. 22 is a block diagram illustrating a state when a lock signal LS has been sent from the master set in FIG. 21.
FIG. 23 is a block diagram illustrating a state when a start signal TS has been sent from the master set in FIG. 21.
FIG. 24 is a block diagram illustrating data communication in which the data transmission device which is locatedmost upstream in electrical communication from the disconnection point in the data transmission system of FIG. 17 is a master.
FIG. 25 is a block diagram illustrating a configuration of a conventional ring network.
FIG. 26 is a sequence diagram illustrating an initialization operation in the ring network of FIG. 25.

### BEST MODE FOR CARRYING OUT THE INVENTION

### (first embodiment)

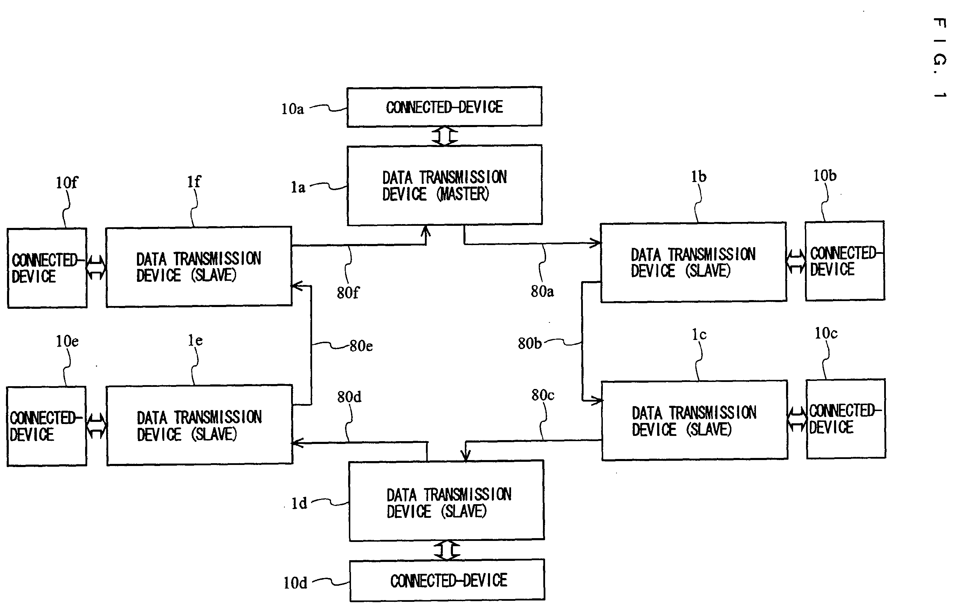

With reference to FIG. 1, a data transmission system according to a first embodiment of the present invention is described. FIG. 1 is a block diagram illustrating a configuration of the data transmission system.

In FIG. 1, the data transmission system according to the first embodiment has a ring topology as its physical topology in which a plurality of nodes are connected according to the ring topology, thereby forming a unidirectional ring LAN. An example of such a data transmission system is described below where the nodes are composed of six data transmission devices 1a to 1f, which are connected via transmission lines 80a to 80f so as to form a ring structure, and transmitted data is transmitted via the transmission lines 80a to 80f in a single direction. To the data transmission devicesla tolf are connected connected-devices (e.g., audio devices, navigation devices, or information terminal devices) 10a to 10f each conducting a process based on data transmitted through the data transmission system and outputting the result to the data transmission system. Note that as a common hardware configuration, the data transmission devices 1a to 1f and the connected-devices l0a to 10f respectively have integral structures.

For example, Media Oriented Systems Transport (hereinafter referred to as MOST) is used as an information communications protocol for the above-described data transmission system. Data transmitted using the MOST as the communications protocol is transmitted with a frame being a basic unit, and frames are sequentially transmitted between the data transmission devices 1 in a single direction. In other words, the data transmission device 1a outputs data to the data transmission device 1b via the transmission line 80a. The data transmission device 1b outputs the data to the data transmission device 1c via the transmission line 80b. The data transmission device 1c outputs the data to the data transmission device 1d via the transmission line 80c. The data transmission device 1d outputs the data to the data transmission device 1e via the transmission line 80d. The data transmission device 1e outputs the data to the data transmission device 1f via the transmission line 80e. The data transmission device 1f outputs the data to the data transmission device 1a via the transmission line 80f. Inexpensive cables such as twisted-pair cables or coaxial cables are used as the transmission lines 80a to 80f, and the data transmission devices 1 mutually perform electric communication. Here, at power-on of the data transmission system, the data transmission device 1a is a master, which transmits data with its own clock, and the other data transmission devices 1b to 1f are slaves, which lock the frequency to the clock generated at the master.

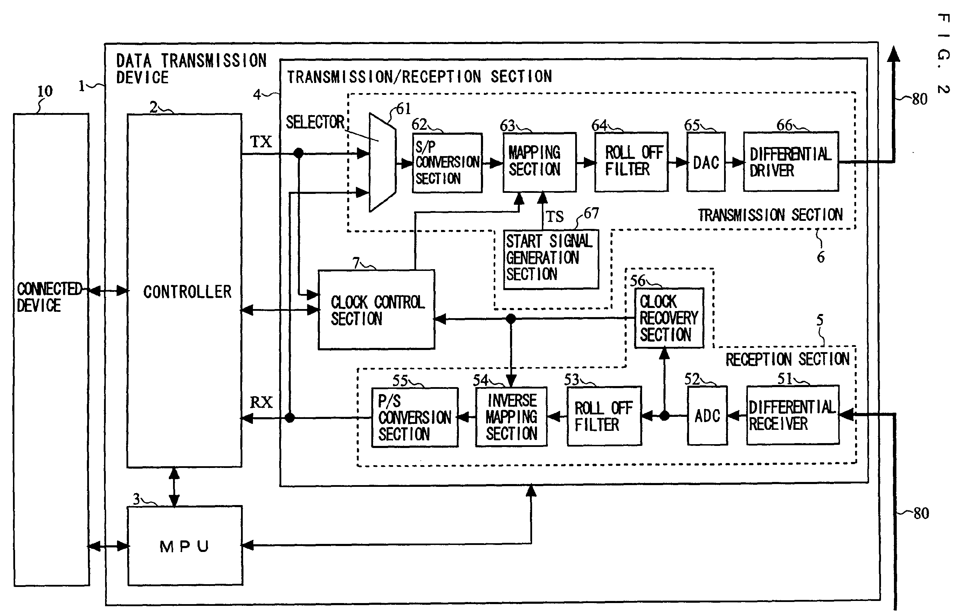

Next, with reference to FIG. 2, a structure of the data transmission device 1 is described. FIG. 2 is a functional block diagram illustrating the structure of the data transmission device 1. Note that the above-described plurality of data transmission devices 1a to 1f each have the same structure.

In FIG. 1, the data transmission devices 1 each includes a controller 2, a microcomputer (MPU) 3, and a transmission/reception section 4. The description below is made using the MOST as an exemplary communications protocol used in the data transmission system.

To the controller 2 is connected the connected-device 10 which performs a process based on data transmitted in the data transmission system and outputs the result to the data transmission system. As its function, the controller 2 converts data from the connected-device 10 connected thereto into a protocol stipulated by the MOST and outputs digital data TX to the transmission/reception section 4, receives digital data RX outputted from the transmission/reception section 4, and transmits data to the connected-device 10.

The MPU 3 controls the controller 2, the transmission/reception section 4, and the aforementioned connected-device 10 based on a transmission mode of the data transmission device 1. For example, the MPU 3 controls the data transmission device 1 with respect to a reset function, a power control (switching of a power-saving mode), a master/slave selection process, a process of shifting to a diag mode, etc.

The transmission/reception section 4, typically composed of an LSI, includes a reception section 5, a transmission section 6, and a clock control section 7. The reception section 5 receives an electric signal inputted from another data transmission device 1 via the transmission line 80, converts the electric signal into a digital signal RX, and outputs it to the controller 2. In addition, the reception section 5 recovers a clock component included in the electric signal and outputs it to the clock control section 7. Based on the clock of the clock control section 7, the transmission section 6 converts the digital data TX outputted from the controller 2 into an electric signal, and outputs it to another data transmission device 1 via the transmission line 80.

The clock control section 7 controls a clock for the data transmission device 1: for example, it recovers a clock used at another data transmission device 1, recovers a clock for the controller 2, or outputs a clock used in a signal processing section on a transmitting side. Specifically, the clock control section 7 outputs a clock recovered at a transmission PLL (Phase Locked Loop) if the data transmission device 1 is a master, and outputs a clock recovered at a reception PLL if the data transmission device 1 is a slave.

The transmission section 6 includes a selector 61, an S/P (Serial/Parallel) conversion section 62, a mapping section 63, a roll off filter 64, a DAC (digital to analog converter) 65, a differential driver 66, and a start signal generation section 67. The S/P conversion section 62, the mapping section 63, and the roll off filter 64 constitute the signal processing section on the transmitting side. To make the explanation specific, a description is provided below with respect to an exemplary case where the signal processing section converts the digital data into an analog electric signal subjected to eight-value mapping and outputs it.

Based on the clock controlled by the clock control section 7, the selector 61 selects data (e.g., the digital data TX or the digital data RX) to be transmitted from the transmission section 6 and outputs it to the S/P conversion section 62.

The S/P conversion section 62 converts the serial digital data TX outputted from the controller 2 into two-bit parallel data in order to perform multilevel transmission. The mapping section 63 performs mapping of the two-bit parallel data obtained after conversion by the S/P conversion section 62 and a start signal TS outputted from the start signal generation section 67, which will be described further below, onto one of eight values of symbols based on the above-described system clock. In this mapping, in order for another data transmission device 1 disposed on the receiving side to perform clock recovery, the two-bit parallel data is allocated alternately to upper four values of symbols and lower four values of symbols among the eight values of symbols. In addition, in order to exclude influence of fluctuation or difference of direct-current components between transmission and reception, the mapping is performed based on difference from a previous value. The roll off filter 64 is a waveform shaping filter for limiting the bandwidth of the electric signal which is to be transmitted and controlling intersymbol interference. For example, an FIR filter with a roll-off rate of 100% is used.

The DAC 65 converts into an analog signal the signal whose bandwidth has been limited by the roll off filter 64. The differential driver 66 amplifies the intensity of the analog signal outputted from the DAC 65 and converts it into a differential signal, then sending it to the transmission line 80. For a pair of lead wires included in the transmission line 80, the differential driver 66 transmits the electric signal, which is sent, to one side (a positive side) of the lead wires in the transmission line 80, while transmitting a signal whose positive and negative are inverse to those of the electric signal to the other side (a negative side) in the transmission line 80. Thus, the electric signals of the positive side and the negative side are transmitted, as a pair, to the transmission line 80, whereby a change of the electric signal on one side offsets a change of the electric signal on the other side, and noise radiated from the transmission line 80 and electric influence from outside can be reduced.

The start signal generation section 67 generates a predetermined start signal TS, which indicates a data communication start timing and is capable of setting determination levels serving as reference for data determination in relation to another data transmission device 1 disposed on the receiving side. The start signal TS generated by the start signal generation section 67 is sent to the mapping section 63.

The reception section 5 includes a differential receiver 51, an ADC (analog to digital converter) 52, a roll off filter 53, an inverse mapping section 54, a P/S (Parallel/Serial) conversion section 55, and a clock recovery section 56. The roll off filter 53, the inverse mapping section 54, and the P/S conversion section 55 constitute a signal processing section on the receiving side.

The differential receiver 51 converts the differential signal inputted from the transmission line 80 into a voltage signal and outputs it to the ADC 52. As described above, the electric signals on the positive side and the negative side are transmitted as a pair to the pair of lead wires included in the transmission line 80, and since the differential receiver 51 determines a signal based on difference between the positive side and the negative side, the differential receiver 51 works effectively against electric influence from outside. Then, the ADC 52 converts the voltage signal outputted from the differential receiver 51 into a digital signal.

As the roll off filter 53, an FIR filter for waveform shaping for performing noise reduction on the digital signal outputted from the ADC 52 is used, for example. It realizes a roll-off characteristic without intersymbol interference in conjunction with the above-described roll off filter 64 on the transmitting side. Based on a clock recovered by the clock recovery section 56 described further below, the inverse mapping section 54 recovers data before being subjected to mapping by the mapping section 63 on the transmitting side based on difference between a received data value and a previous value. A difference process at the inverse mapping section 54 is performed using as reference the determination levels set by the above-described start signal TS, and the determination levels can be used as ideal values of difference values. By this inverse mapping process at the inverse mapping section 54, a received signal is converted into parallel data. The P/S conversion section 55 converts the parallel data subjected to determination at the inverse mapping section 54 into serial digital data RX, and outputs it to the controller 2.

The clock recovery section 56 recovers the clock component of the signal received from the transmission line 80, which is outputted from the ADC 52, thereby recovering a transmission line clock, which is used as a clock for the signal processing section on the receiving side. The clock recovered at the clock recovery section 56 is outputted to the clock control section 7 and used as an input reference clock for the reception-side PLL.

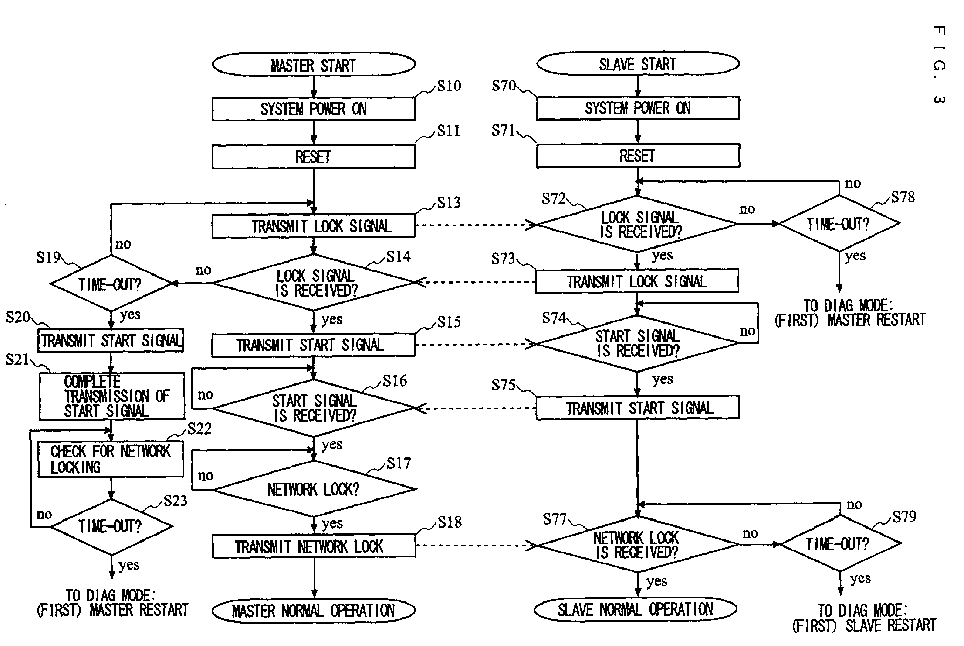

Next, an initialization process in the data transmission system is described. In the above-described data transmission system, for example, at power-on of the entire system, an initialization operation is performed on a physical layer of a protocol to define mechanical connection, and in this initialization operation, clock synchronization between the data transmission devices is established and the setting of determination levels serving as reference for data determination is performed. With reference to FIG. 3 to FIG. 5, the initialization operation in the data transmission system is described. FIG. 3 to FIG. 5 are flowcharts illustrating the initialization operation in the data transmission system.

First, with reference to FIG. 3, a procedure in which the data transmission system performs the initialization operation and thereafter shifts to a normal operation for performing data transmission and reception is described. The initialization operation of the data transmission devices described below is applicable to any system where a plurality of data transmission devices 1 are connected so as to form a ring structure, but to make the explanation specific, the description is made with reference to an exemplary case where six data transmission devices 1a to 1f are connected via the transmission lines 80a to 80f so as to form a ring structure (see FIG. 1). Note that, as described above, at power-on of the data transmission system, the data transmission device 1a is a master, which transmits data with its own clock, and the other data transmission devices 1b to 1f are slaves, which lock the frequency to the clock generated at the master.

In FIG. 3, the power of all data transmission devices 1a to 1f connected to the data transmission system is turned on, whereby the power of the data transmission system is turned on (steps S10 and S70). The MPUs 3a to 3f each provided in one of the data transmission devices 1a to 1f output a reset signal to the controllers 2a to 2f and the transmission/reception sections 4a to 4f corresponding thereto, whereby reset states of the controllers 2a to 2f and the transmission/reception sections 4a to 4f are cancelled (steps S11 and S71) . This reset process allows the transmission/reception sections 4a to 4f (physical layer) and the controllers 2a to 2f (data link layer) in the data transmission devices 1a to 1f to shift to the initialization operation.

Next, the master data transmission device 1a transmits a lock signal LS to the transmission line 80a basedon the transmission PLL controlled by the clock control section 7 thereof (step S13) . This lock signal LS is, for example, a sinusoidal signal based on a clock frequency of the transmission PLL included in the master data transmission device 1a.

On the other hand, the slave data transmission device 1b continues to determine whether the lock signal LS has been received from the transmission line 80a (step S72) until a predetermined time-out period elapses (step S78). If the lock signal LS transmitted from the master data transmission device 1a via the transmission line 80a in the above-described step S13 is received, the slave data transmission device 1b recovers a clock with the clock recovery section 56 thereof, inputs it to the reception PLL as a reference clock, and, based on a clock recovered by the reception PLL, transmits a lock signal LS to the transmission line 80b (step S73). Similarly, each of the other slave data transmission devices 1c to 1f has been continuing to wait for a reception of the lock signal LS (step S72), and, after receiving the lock signal LS sent from the data transmission device upstream thereof and performing clock recovery, transmits the lock signal LS to the data transmission device downstream thereof (step S73).

The master data transmission device 1a continues to determine whether the lock signal LS has been received from the transmission line 80f (step S14) until a predetermined time-out period elapses (step S19), and, in the meantime, continues to transmit the lock signal LS (step S13). Once the data transmission device 1f performs the above-described step S73, the master data transmission device 1a performs clock recovery with the clock recovery section 56 thereof to carry out the setting of the reception PLL, and proceeds to a process of the next step S15.

At step S15, the master data transmission device 1a generates, in the start signal generation section 67 thereof, a start signal TS which indicates a data communication start timing and is capable of setting determination levels serving as reference for data determination in relation to the downstream data transmission device 1b, and transmits the start signal TS to the transmission line 80a.

The slave data transmission device 1b has been continuing to determine whether the start signal TS has been received from the transmission line 80a (step S74). Once the start signal TS transmitted from the master data transmission device 1a via the transmission line 80a at the above-described step S15 is received, the slave data transmission device 1b immediately generates, in the start signal generation section 67 thereof, a start signal TS used in relation to the data transmission device 1c downstream thereof, and transmits the start signal TS to the transmission line 80b (step S75) . Then, the data transmission device 1b uses the start signal TS received from the data transmission device 1a to perform the setting of the determination levels in the inverse mapping section 54 thereof, retains the determination values, and proceeds to a process of the next step S77.

Similarly, each of the other slave data transmission devices 1c to 1f has been continuing to wait for a reception of the start signal TS (step S74), and, if the start signal TS sent from the data transmission device upstream thereof is received, immediately transmits the start signal TS thereof to the data transmission device downstream thereof (step S75). Also, similarly, each of the other data transmission devices 1c to 1f uses the start signal TS received from the data transmission device upstream thereof to perform the setting of the determination levels in the inverse mapping section 54 thereof, retains the determination values, and proceeds to a process of the next step S77.

The master data transmission device 1a has been continuing to determine whether the start signal TS has been received from the transmission line 80f (step S16). In response to the data transmission device 1f performing the above-described step S75, the data transmission device 1a uses the start signal TS received from the data transmission device 1f to perform the setting of the determination levels in the inverse mapping section 54 thereof, and retains the determination values.

Next, the master data transmission device 1a continues to determine whether network locking has been performed on the entire data transmission system (step S17). This determination of the network locking is set by the MPU 3 of the device when the above-described lock signal LS which has been relayed through the data transmission system is received, without shifting to a diag mode described further below. Then, once the network locking is set, an identifier indicating that the entire data transmission system is capable of regular communication without any failure such as a line disconnection or the like is generated. If the network locking is set by the MPU 3 thereof, the data transmission device 1a adds the identifier indicating the network locking to a predetermined data frame, transmits the data frame to all of the slave data transmission devices 1b to 1f (step S18), and shifts to a normal operation as a master.

On the other hand, at step S77, each of the slave data transmission devices 1b to 1f continues to determine whether the data frame having the identifier indicating the network locking added thereto has been received from the data transmission device 1 upstream thereof, until a predetermined time-out period elapses (step S79) . Then, once each of the slave data transmission devices 1b to 1f receives the data frame having the identifier indicating the network locking added thereto transmitted from the master data transmission device 1a at the above-described step S18, it shifts to a normal operation as a slave.

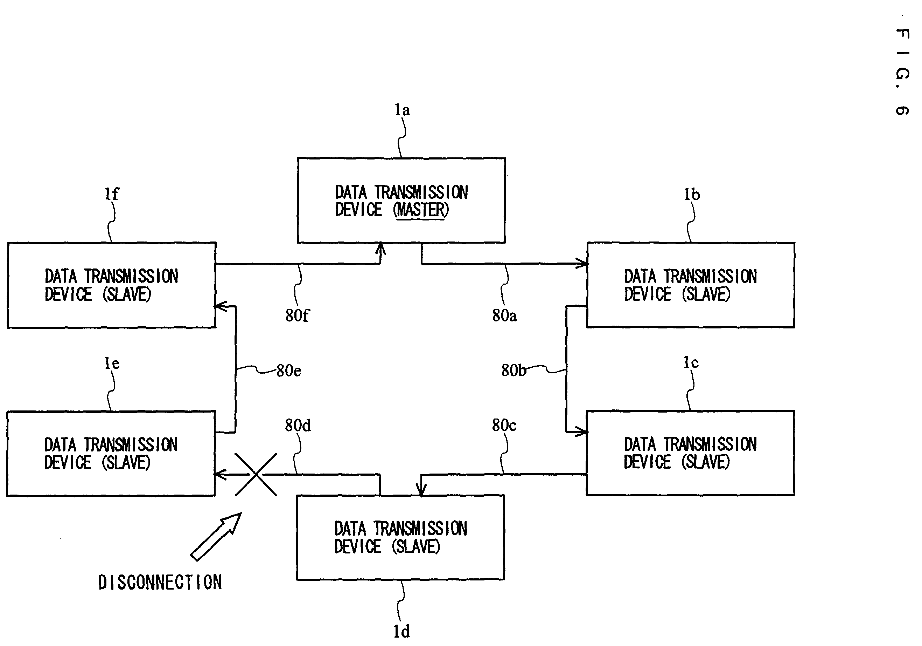

Next, an initialization operation which is performed in the case where a portion of the data transmission system has become incapable of transmission or reception because of a disconnection of the transmission line 80, a failure of a transmission or reception function of any data transmission device 1 is described. The initialization operation of the data transmission device described below can be applied regardless of which portion of the system is damaged where a plurality of data transmission devices 1 are connected so as to form a ring structure. Herein, to make the explanation specific, a description is made with reference to an exemplary case where, in the data transmission system in which the six data transmission devices 1a to 1f are connected via the transmission lines 80a to 80f so as to form a ring structure, a disconnection has occurred at the transmission line 80d (see FIG. 6) .

In FIG. 3, a procedure of steps S10 to S13 performed by the master data transmission device 1a and a procedure of steps S70 to S72 performed by the slave data transmission devices 1b to 1f are identical to those described above; therefore, a description thereof is omitted.

At step S14, the master data transmission device 1a continues to determine whether the lock signal LS has been received from the transmission line 80f until the predetermined time-out period elapses (step S19), and, in the meantime, continues to transmit the lock signal LS (step S13) . However, because the transmission line 80d is disconnected as described above, clock synchronization is not established between the data transmission devices 1d and 1e. As a result, since the transmission of the lock signal LS from the data transmission device 1f to the transmission line 80f is not performed, the predetermined period elapses at the above-described step S19, resulting in occurrence of a time-out for the process of the data transmission device 1a. If a time-out occurs at the above-described step S19, the data transmission device 1a transmits the start signal TS via the transmission line 80a (step S20), similarly to the above-described step S15.

Next, the master data transmission device 1a completes the transmission of the start signal TS transmitted at the above-described step S20 (step S21), and checks for network locking of the entire data transmission system (step S22) until a predetermined time-out period elapses (step S23). However, because the transmission line 80d is disconnected, it is impossible to receive the lock signal LS, which has traveled around the data transmission system, and the MPU 3 of the device cannot perform the network locking. Accordingly, the predetermined period elapses at the aforementioned step S23, resulting in occurrence of a time-out, whereby the data transmission device 1a shifts to the diag mode. The data transmission device 1a is restarted (a first restart) as a master also in the diag mode.

Each of the slave data transmission devices 1b to 1f continues to determine whether the lock signal LS has been received from the corresponding one of the transmission lines 80a to 80e at step S72 as described above, until the predetermined time-out period elapses (step S78) . Each of the data transmission devices 1b to 1d, which is capable of receiving the lock signal LS and the start signal TS, performs the above-described steps S73 to S75 and thereafter continues to determine whether the data frame having the identifier indicating the network locking added thereto has been received from the data transmission device upstream thereof at the above-described step S77, until the predetermined time-out period elapses (step S79). However, because the master data transmission device 1a is incapable of performing the network locking as described above, the data frame having the identifier indicating the network locking added thereto is not transmitted in the data transmission system. Accordingly, the predetermined period elapses at the above-described step S79, resulting in occurrence of time-out, whereby the data transmission devices 1b to 1d shift to the diag mode. The data transmission devices 1b to 1d are restarted (first restart) as slaves also in the diag mode.

On the other hand, the slave data transmission devices 1e and 1f are incapable of receiving the lock signal LS because of the disconnection of the transmission line 80d. Accordingly, the predetermined period elapses at the above-described step S78, resulting in occurrence of time-out, whereby the data transmission devices 1e and 1f shift to the diag mode. The data transmission devices 1e and 1f are restarted (first restart) as masters in the diag mode.

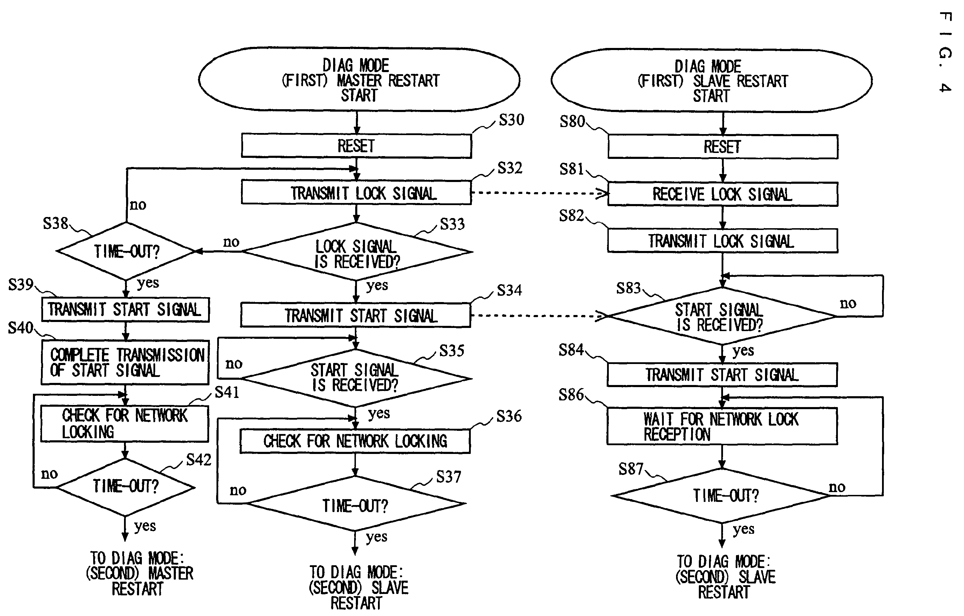

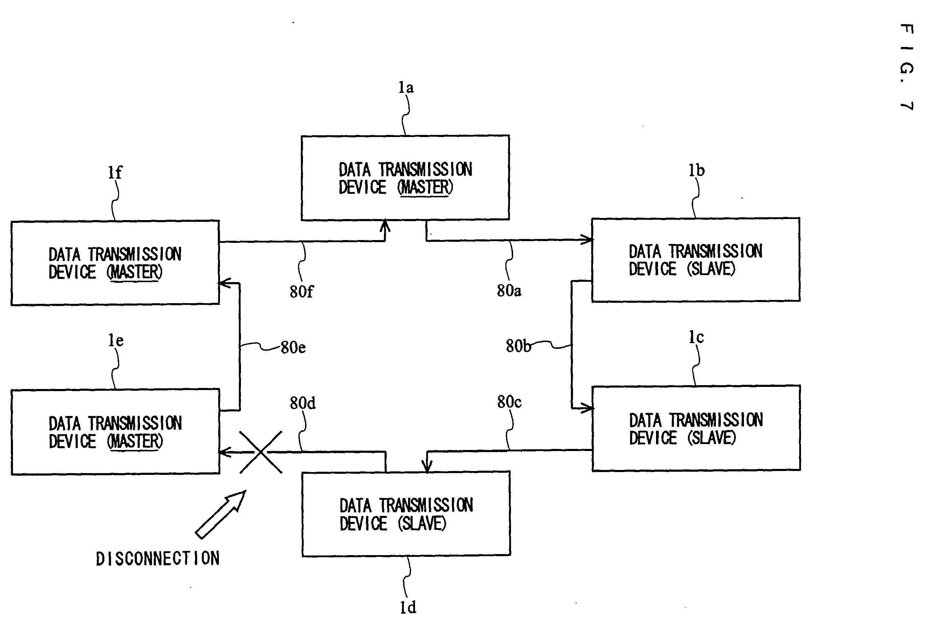

With reference to FIG. 4, a (first) restart operation after the data transmission system has shifted to the diag mode is described. To make the explanation specific, a description is made with reference to an exemplary case where, in the data transmission system in which the six data transmission devices 1a to 1f are connected via the transmission lines 80a to 80f so as to form a ring structure, a disconnection has occurred at the transmission line 80d as before. Here, in the case where the transmission line 80d is disconnected, as a result of the above-described procedure, the data transmission devices 1a, 1e, and 1f are restarted as masters, and the data transmission devices 1b to 1d are restarted as slaves (see FIG. 7).

In FIG. 4, first, the MPUs 3a to 3f provided in the data transmission devices 1a to 1f output reset signals to the respective controllers 2a to 2f and transmission/reception sections 4a to 4f, whereby the controllers 2a to 2f and the transmission/reception sections 4a to 4f are reset (steps S30 and S80) . This reset process allows the transmission/reception sections 4a to 4f (physical layer) and the controllers 2a to 2f (data link layer) in the data transmission devices 1a to 1f to shift to the (first) restart operation.

Next, the master data transmission devices 1a, 1e, and 1f transmit the lock signal LS to the transmission line 80a, 80e, and 80f, based on the transmission PLL controlled by the clock control section 7 thereof (step S32).

On the other hand, the slave data transmission device 1b receives the lock signal LS from the transmission line 80a (step S81), and, after performing clock recovery with the clock recovery section 56 thereof to perform the setting of the reception PLL, transmits the lock signal LS to the transmission line 80b based on the reception PLL (step S82). Similarly, each of the other slave data transmission devices 1c and 1d receives the lock signal LS (step S81), and, after performing clock recovery, transmits the lock signal LS to the data transmission device downstream thereof (step S82).

The master data transmission devices 1a, 1e, and 1f continue to determine whether the lock signal LS has been received from the transmission lines 80f, 80d, and 80e, respectively (step S33), until a predetermined time-out period elapses (step S38), and, in the meantime, continue to transmit the lock signal LS (step S32). Since the data transmission device 1f has transmitted the lock signal LS to the transmission line 80f by performing the above-described step S32, the data transmission device 1a performs clock recovery with the clock recovery section 56 thereof to perform the setting of the reception PLL and proceeds to a process of the next step S34. Similarly, since the data transmission device 1e has transmitted the lock signal LS to the transmission line 80e by performing the above-described step S32, the data transmission device 1f performs clock recovery with the clock recovery section 56 thereof to perform the setting of the reception PLL and proceeds to a process of the next step S34. On the other hand, because the transmission line 80d is disconnected, the data transmission device 1e is incapable of receiving the lock signal LS from the transmission line 80d. Accordingly, the predetermined period elapses at the above-described step S38, resulting in occurrence of time-out, and the data transmission device 1e proceeds to a process of the next step S39.

At step S34, the master data transmission devices 1a and 1f each generate, in the start signal generation section 67 thereof, a start signal TS for the data transmission device downstream thereof, and transmits it to the corresponding one of the transmission lines 80a and 80f. Meanwhile, after the time-out has occurred at the above-described step S38, the master data transmission device 1e transmits the start signal TS via the transmission line 80e at step S39 in the same manner as that of the above-described step S34.

On the other hand, the slave data transmission devices 1b to 1d each have been continuing to wait for a reception of the start signal TS (step S83) and, once the start signal TS sent from the data transmission device upstream thereof is received, immediately transmit a start signal TS of its own to the data transmission device downstream thereof (step S84). Then, the data transmission devices 1b to 1d each use the start signal TS received from the data transmission device upstream thereof to perform the setting of the determination levels in the inverse mapping section 54 thereof, retains the determination values, and proceeds to a process of the next step S86.

The master data transmission device 1a has been continuing to determine whether the start signal TS has been received from the transmission line 80f (step S35) . Once the data transmission device 1f performs the above-described step S34, the data transmission device 1a uses the start signal TS received from the data transmission device 1f to perform the setting of the determination levels in the inverse mapping section 54 thereof, and retains the determination values. Similarly, the master data transmission device 1f has been continuing to determine whether the start signal TS has been received from the transmission line 80e (step S35). Once the data transmission device 1e performs the above-described step S39, the data transmission device 1f uses the start signal TS received from the data transmission device 1e to perform the setting of the determination levels in the inverse mapping section 54 thereof, and retains the determination values.

Next, the master data transmission devices 1a and 1f check for network locking of the entire data transmission system (step S36) until a predetermined time-out period elapses (step S37). Because, in the diag mode, it is already confirmed that the above-described network locking cannot be performed, the MPU 3 of each of them does not perform network locking. Accordingly, the predetermined period elapses at the above-described step S37, resulting in occurrence of time-out, and the data transmission devices 1a and 1f shift to a (second) slave restart of the diag mode. Specifically, because each of the data transmission devices 1a and 1f, which have shifted to the (first) master restart of the diag mode, has received data such as the lock signal LS, etc. , from the data transmission device upstream thereof, the data transmission devices 1a and 1f are determined to be not located immediately downstream of the damaged portion in data transmission and changed to slaves.

On the other hand, the master data transmission device 1e completes the transmission of the start signal TS transmitted at the above-described step S39 (step S40), and checks for network locking of the entire data transmission system (step S41) until a predetermined time-out period elapses (step S42). As described above, because, in the diag mode, it is already confirmed that the above-described network locking cannot be performed, the MPU 3 thereof does not perform network locking. Accordingly, the predetermined period elapses at the above-described step S42, resulting in occurrence of time-out, and the data transmission device 1e shifts to a (second) master restart of the diag mode. Specifically, because the data transmission device 1e, which has shifted to the (first) master restart of the diag mode, has not received data such as the lock signal LS, etc., from the data transmission device upstreamthereof,the datatransmission device 1e is determined to be a data transmission device located immediately downstream of the damaged portion in data transmission and restarted again as a master.

At step S86, each of the slave data transmission devices 1b to 1d continues to wait for reception of the data frame having the identifier indicating the above-described network locking added thereto from the data transmission device upstream thereof, until a predetermined time-out period elapses (step S87). However, as described above, because the master data transmission devices 1a, 1e, and 1f cannot perform network locking, the data frame having the identifier indicating the above-described network locking added thereto is not transmitted through the data transmission system. Accordingly, the predetermined period elapses at the above-described step S87, resulting in occurrence of time-out, and the data transmission devices 1b to 1d shift to the (second) slave restart of the diag mode. Specifically, because each of the data transmission devices 1b to 1d, which have shifted to the (first) slave restart of the diag mode, has received the data such as the lock signal LS, etc., from the data transmission device upstream thereof, the data transmission devices 1b to 1d are determined to be not located immediately downstream of the damaged portion in data transmission and restarted again as slaves.

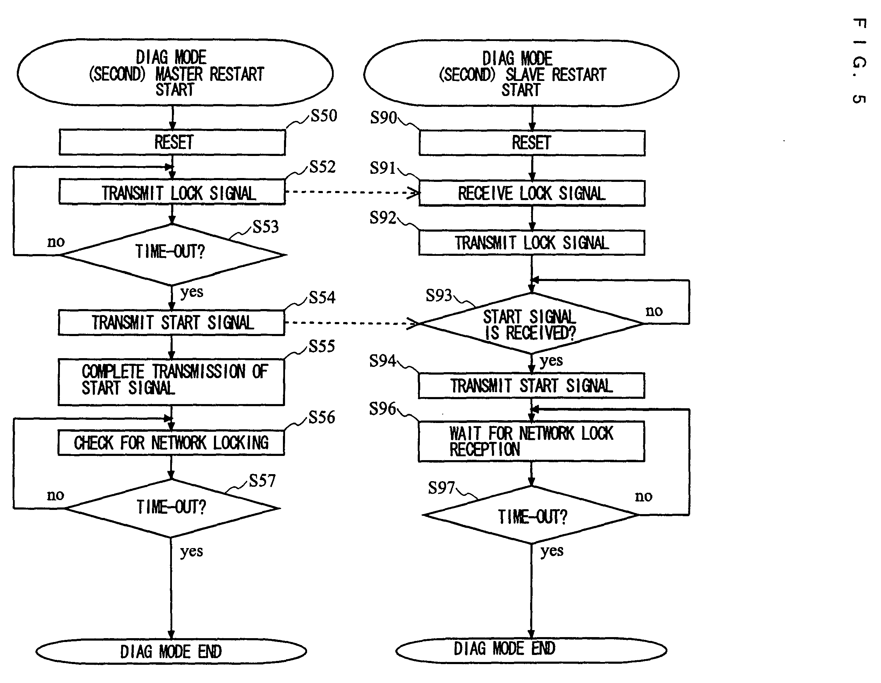

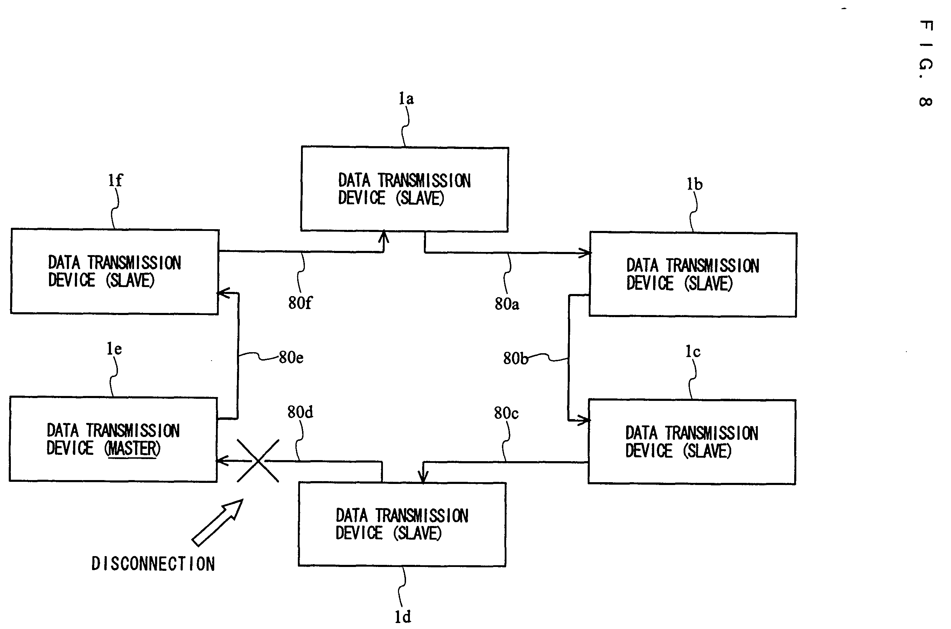

With reference to FIG. 5, a (second) restart operation after the data transmission system shifted to the diag mode is described. To make the explanation specific, a description is made with reference to an exemplary case where, in the data transmission system in which the six data transmission devices 1a to 1f are connected via the transmission lines 80a to 80f so as to form a ring structure, a disconnection has occurred at the transmission line 80d as before. Here, in the case where the transmission line 80d is disconnected, as a result of the above-described procedure, the second restart is performed such that the data transmission device 1e is restarted as a master, and the data transmission devices 1a to 1d and 1f are restarted as slaves (see FIG. 8).

In FIG. 5, firstly, reset signals are outputted from the MPUs 3a to 3f provided in the data transmission devices 1a to 1f to the respective controllers 2a to 2f and transmission/reception sections 4a to 4f, whereby the controllers 2a to 2f and the transmission/reception sections 4a to 4f are reset (steps S50 and S90). This reset process allows the transmission/reception sections 4a to 4f (physical layer) and the controllers 2a to 2f (data link layer) in the data transmission devices 1a to 1f to shift to the (second) restart operation.

Next, the master data transmission device 1e continues to transmit the lock signal LS to the transmission line 80e based on the transmission PLL controlled by the clock control section 7 thereof (step S52), until a predetermined time-out period elapses (step S53).

On the other hand, the slave data transmission device 1f receives the lock signal LS from the transmission line 80e (step S91), and, after performing clock recovery with the clock recovery section 56 thereof to perform the setting of the reception PLL, transmits the lock signal LS to the transmission line 80a based on the reception PLL (step S92). Similarly, each of the other slave data transmission devices 1a to 1d receives the lock signal LS (step S91), and, after performing clock recovery, transmits the lock signal LS to the data transmission device downstream thereof (step S92).

The predetermined period elapses at the above-described step S53, resulting in occurrence of time-out, and the data transmission device 1e proceeds to a process of the next step S54. At step S54, the master data transmission device 1e generates, in the start signal generation section 67 thereof, a start signal TS for the slave data transmission device 1f and transmits it to the transmission line 80e.

The slave data transmission device 1f has been continuing to determine whether the start signal TS has been received from the transmission line 80e (step S93). If the start signal TS transmitted from the master data transmission device 1e via the transmission line 80e at the above-described step S54 is received, the data transmission device 1f immediately generates, in the start signal generation section 67 thereof, a start signal TS in relation to the data transmission device 1a downstream thereof and transmits it to the transmission line 80f (step S94). Then, the data transmission device 1f uses the start signal TS received from the data transmission device 1e to perform the setting of the determination levels in the inverse mapping section 54 thereof, retains the determination values, and proceeds to a process of the next step S96.

Similarly, each of the other slave data transmission devices 1a to 1d has been continuing to wait for reception of the start signal TS (step S93), and, if the start signal TS sent from the data transmission device upstream thereof is received, immediately transmits a start signal TS of its own to the data transmission device downstream thereof (step S94). Each of the other slave data transmission devices 1a to 1d also uses the start signal TS received from the data transmission device upstream thereof to perform the setting of the determination levels in the inverse mapping section 54 thereof, retains the determination values, and proceeds to a process of the next step S96.

Next, the master data transmission device 1e completes the transmission of the start signal TS transmitted at the above-described step S54 (step S55), and continues to check for network locking of the entire data transmission system (step S56) until a predetermined time-out period elapses (step S57). As described above, because, in the diag mode, it is already confirmed that the above-described network locking cannot be performed, the MPU 3 thereof does not perform network locking. Accordingly, the predetermined period elapses at the above-described step S57, resulting in occurrence of time-out for the data transmission device 1e. As a result of the occurrence of the time-out at step S57, the MPU 3 of the data transmission device 1e terminates the diag mode based on the number of times the time-out for checking for network locking has occurred, the number of times the restart has been performed, or the like, and starts transmitting and receiving data to and from the other data transmission devices 1a to 1d and 1f.

On the other hand, each of the slave data transmission devices 1a to 1d and 1f continues to wait for reception of the data frame having the identifier indicating the network locking added thereto from the data transmission device upstream thereof (step S96), untilapredetermined time-outperiod elapses(stepS97). However, as described above, because the master data transmission device 1e cannot perform network locking, the data frame having the identifier indicating the above-described network locking added thereto is not transmitted through the data transmission system. Accordingly, the predetermined period elapses at the above-described step 597, resulting in occurrence of time-out for each of the data transmission devices 1a to 1d and 1f. As a result of the occurrence of the time-out at step S97, the MPU 3 included in each of the data transmission devices 1a to 1d and 1f terminates the diag mode based on the number of times the time-out for checking for network locking has occurred, the number of times the restart has been performed, or the like, and starts transmitting and receiving data to and from the other data transmission devices.

As described above, the data transmission system according to the first embodiment shifts to the diag mode if a disconnection of a transmission line or failure of the transmission or reception function of a data transmission device occurs, disabling transmission or reception at a certain portion. Next, the first restart operation of the diag mode is performed to detect a data transmission device located immediately downstream of the damaged portion. Then, the second restart operation of the diag mode is performed so that, a data transmission device located most upstream being determined to be a master, the setting of the physical layer, such as clock synchronization with the other data transmission devices or the like, is established, and the diagmode is terminated, whereby subsequent data transmission and reception are enabled. That is, even in the case where transmission or reception is made impossible at a certain portion, the above-described data transmission system constituted by a ring LAN is able to perform communication employing the transmission lines with the exclusion of the damaged portion.

The controller 2 included in each of the data transmission devices 1 has a function of detecting the position, on the system, of the device containing it by communicating with other data transmission devices. The position (hereinafter referred to as "N"), on the system, of the device is set in the above-described initialization operation such that N=0 is set for a master, and for slaves one is added to N sequentially in the downstreamdirection. Specifically, in the exemplary data transmission system illustrated in FIG. 8, N=0 is set for the master data transmission device 1e, N=1 is set for the slave data transmission device 1f, N=2 is set for the data transmission device 1a, ..., and N=5 is set for the data transmission device 1d. Thus, the damaged portion on the above-described data transmission system is easily detectable by reading the position, on the system, of the device. As a result, it is made easy to repair the damaged portion on the data transmission system.

In the case where electrical communication is impossible at a portion of the data transmission system, according to the operation of the above-described data transmission system, a data transmission device 1 which does not receive the lock signal LS (e. g. , "No" is selected at the above-described step S33) is finally set to be a master. However, a master may be set according to another arrangement. For example, a data transmission device 1 which cannot establish clock synchronization by performing the setting of the reception PLL following clock recovery performed by the clock recovery section 56 may be set to be a master. Alternatively, a data transmission device 1 which does not receive the start signal TS may be set to be a master.

### (second embodiment)

Next, a data transmission system according to a second embodiment of the present invention is described. The present data transmission system is different from the above-described first embodiment in the procedure of the initialization process. Specifically, although the first embodiment prescribes a procedure in which the physical layer and data link layer of the data transmission system are initialized at the same time, in the second embodiment, the initialization process is performed according to a procedure in which the initialization for the physical layer of the data transmission system is completed first and thereafter the initialization for the data link layer is started. The structure of the data transmission system and the structures of a plurality of data transmission devices included in the data transmission system according to the second embodiment are identical to those of the first embodiment, which have been described with reference to FIG. 1 and FIG. 2. Therefore, the same reference numerals are assigned to the identical structural components, and detailed descriptions thereof are omitted.

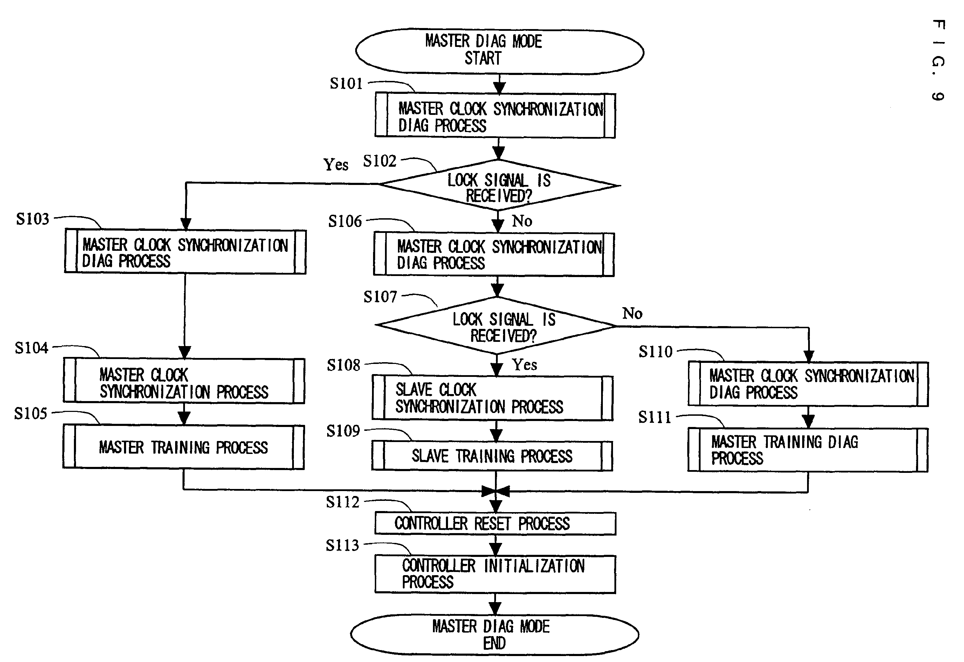

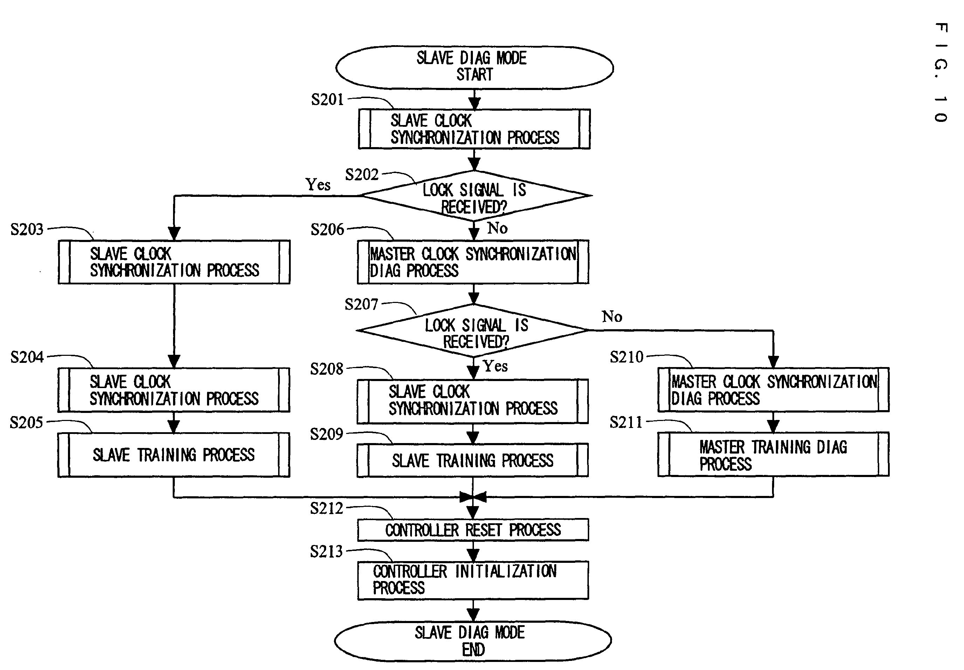

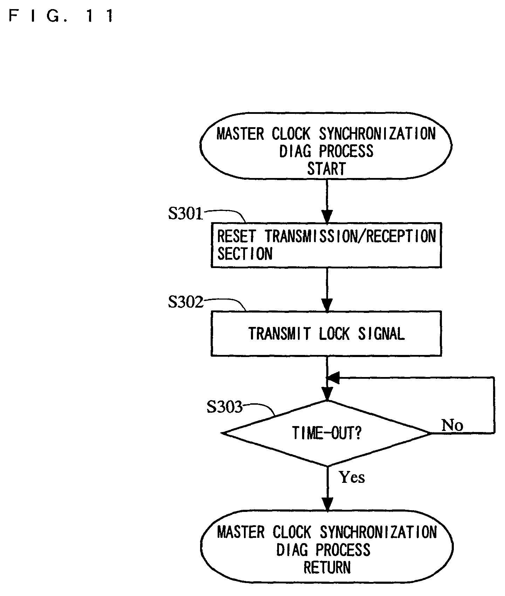

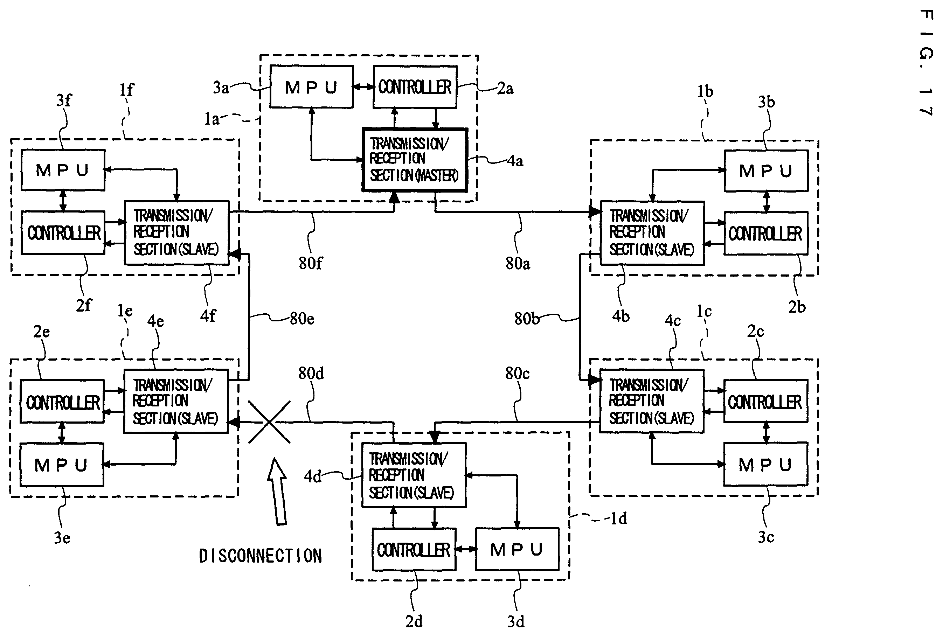

The initialization process in the data transmission system according to the second embodiment is described. In the present data transmission system, for example, at power-on of the entire system, the initialization operation for the physical layer (the transmission/reception section 4) of the protocol is performed first, and during this initialization operation, the establishment of clock synchronization between each transmission/reception section 4 and the setting of the determination levels serving as reference for data determination are performed. Then, after the initialization process for the physical layer is completed and it shifts into a state in which it is capable of data communication, the initialization process for the data link layer is performed. Hereinafter, with reference to FIG. 9 to FIG. 24, the initialization operation in the data transmission system is described. FIG. 9 is a flowchart illustrating an initialization operation in a data transmission device 1 which is booted as a master at power-on, and FIG. 10 is a flowchart illustrating an initialization operation in a data transmission device 1 which is booted as a slave at power-on. FIG. 11 to FIG. 16 are subroutines illustrating detailed operations performed at respective steps of FIG. 9 and FIG. 10. FIG. 17 to FIG. 24 are schematic diagrams illustrating states in which the data transmission system is in respective operations based on FIG. 9 and FIG. 10.

The initialization operation of the data transmission devices 1 described below is applicable to any system where a plurality of data transmission devices 1 are connected so as to form a ring structure, but to make the description specific, the description is made with reference to an exemplary case where six data transmission devices 1a to 1f are connected via the transmission lines 80a to 80f so as to form a ring structure (see FIG. 17) . At power-on of the data transmission system, the data transmission device 1a is a master, which transmits data with its own clock, and the other data transmission devices 1b to 1f are slaves, which lock the frequency to the clock generated at the master. In addition, the description is made with reference to an exemplary case where all of the data transmission devices 1 are capable of transmitting data between one another and an exemplary case where a disconnection has occurred at the transmission line 80d. In FIG. 17 to FIG. 24, the connected-devices 10a to 10f in the data transmission system are omitted from illustration. The following description of the initialization process for the physical layers is made with reference to the diag mode in which power of the entire data transmission system has already been turned on, a state of data communication between those physical layers has been diagnosed, whereafter a master has been set in accordance with that diagnosis, and an initialization process is performed.

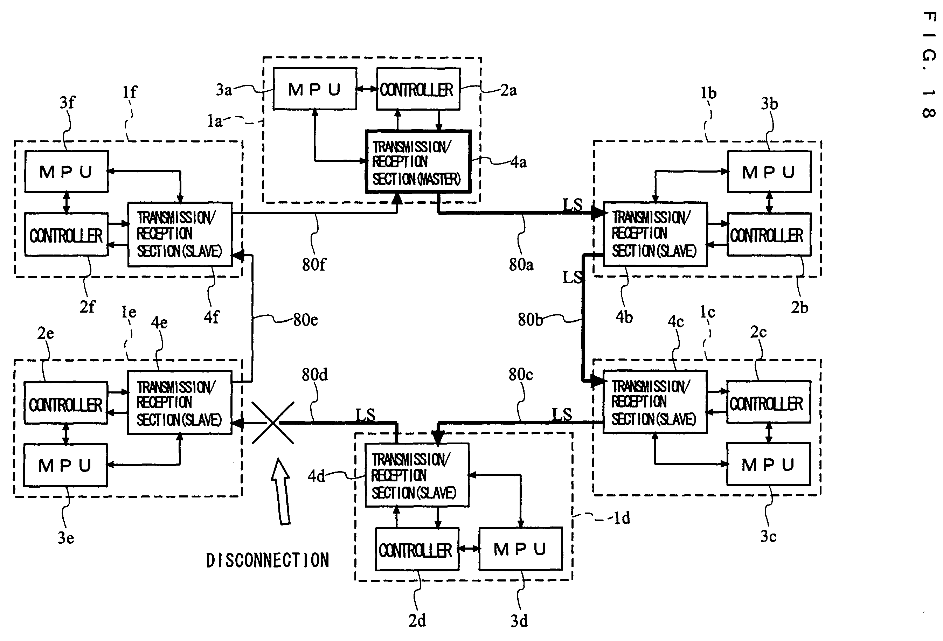

With reference to FIG. 9, the initialization operation in a data transmission device 1 which is booted as a master at power-on is described. First, the data transmission device 1a, which is connected to the data transmission system and has been set to be a master at power-on, performs a master clock synchronization diag process (the state of FIG. 18; step 5101), and proceeds to a process of the next step. Hereinafter, with reference to FIG. 11, a detailed operationinthe masterclocksynchronization diag process is described. In the aforementioned step S101, the controller 2a, the MPU 3a, and the transmission/reception section 4a included in the data transmission device 1a, which has been set to be a master, are subjected to processing; however, since another data transmission device may also be subjected to processing in the master clock synchronization diag process, all structural components are collectively referred to as the data transmission device 1, the controller 2, the MPU 3, the transmission/reception section 4, and the transmission line 80 in the following description.

In FIG. 11, the MPU 3 of the data transmission device 1, which has been set to be a master, outputs a reset signal to the transmission/reception section 4, whereby the transmission/reception section 4 is reset (step S301). In step S301, since a reset signal is not outputted to the controller 2, the controller 2 remains in a reset state (i . e. , the initialization operation is not performed thereon). The transmission/reception section 4 of the master, which has been reset at the above-described step S301, transmits a lock signal LS to the transmission line 80 based on the transmission PLL controlled by the clock control section 7 (step S302) . This lock signal LS is a sinusoidal signal based on a clock frequency of the transmission PLL included in the master data transmission device 1, as in the first embodiment.

Next, the MPU 3 and the transmission/reception section 4, which are subjected to processing in the above-described steps S301 and S302, wait for a predetermined time-out period to elapse (step S303), and then the process according to this subroutine is completed.

Referring back to FIG. 9, the data transmission device 1a, which has been set to be a master at power-on, determines whether the transmission/reception section 4a has received the lock signal LS from the upstream data transmission device 1f (step S102). Here, if the lock signal LS is outputted from the respective upstream data transmission device 1, the data transmission devices 1b to 1f, which have been set to be slaves at power-on, use the lock signal LS to establish clock synchronization and send a lock signal to the downstream data transmission device 1 (a detailed operation of the slave is described later). Therefore, in the case where clock synchronization is regularly established between the slave data transmission devices 1b to 1f, the lock signal LS is sent from the upstream data transmission device 1f to the master data transmission device 1a. On the other hand, in the case where disconnection has occurred at any one of the transmission lines 80a to 80f, or any trouble has occurred with the transmission and reception function of any of the transmission/reception sections 4a to 4f, for example, the lock signal LS is not sent from the upstream data transmission device 1f (the state of FIG. 18) . In other words, if the transmission/reception section 4a receives the lock signal LS from the upstream data transmission device 1f in the above-described step S102, it is determined that the data communication function of the entire data transmission system works regularly (i.e., no disconnection has occurred at any transmission line 80).

In the case where the transmission/reception section 4a has received the lock signal LS from the upstream data transmission device 1f at the above-described step S102, the data transmission device 1a performs the above-described master clock synchronization diag process again (step S103). The master clock synchronization diag process performed in this step S103 is identical to the operation in the above-described steps S301 to S303, and therefore a detailed description thereof is omitted.

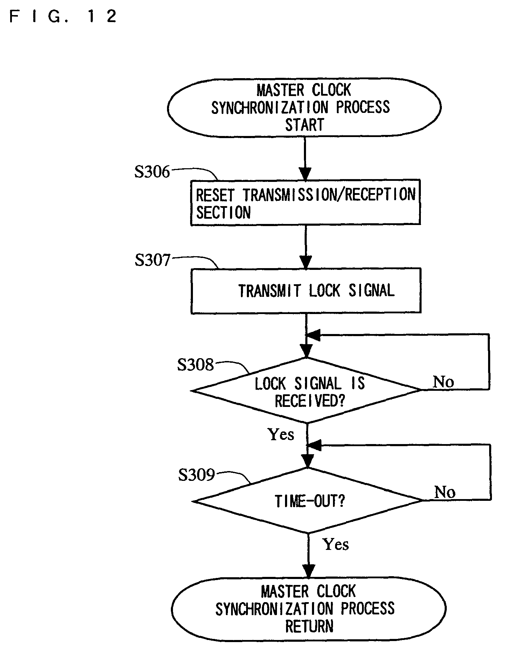

Next, the data transmission device 1a performs a master clock synchronization process (step S104), and proceeds to a process of the next step. With reference to FIG. 12, a detailed operation in the master clock synchronization process is described below.

In FIG. 12, the MPU 3a of the data transmission device 1a, which has been set to be a master, outputs a reset signal to the transmission/reception section 4a, whereby the transmission/reception section 4a is reset (step S306). In step S306, since a reset signal is not outputted to the controller 2a, the controller 2a remains in a reset state (i.e., the initialization operation is not performed thereon). The transmission/reception section 4a of the master, which has been reset at the above-described step S306, transmits a lock signal LS to the transmission line 80a based on the transmission PLL controlled by the clock control section 7 (step S307) . This lock signal LS is a sinusoidal signal based on a clock frequency of the transmission PLL included in the master data transmission device 1, as in the first embodiment.

Then, the transmission/reception section 4a waits for reception of the lock signal LS from the transmission line 80f (step S308) . In the case where the data transmission device 1f has sent the lock signal LS, the transmission/reception section 4a of the master performs clock recovery with the clock recovery section 56 in the device thereof and performs the setting of the reception PLL. In addition, the MPU 3a and the transmission/reception section 4a wait for a predetermined time-out period to elapse (step S309), and the process according to the present subroutine is completed.

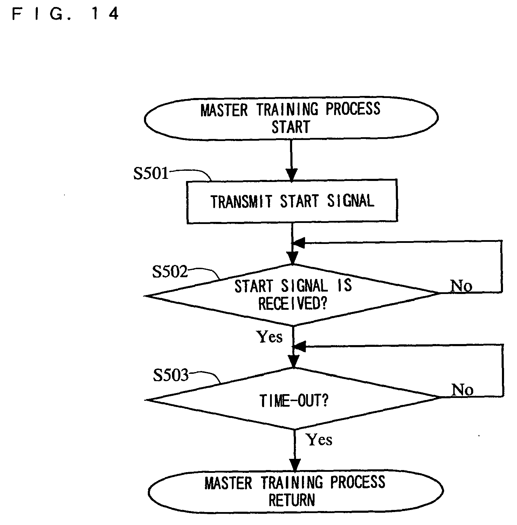

Referring back to FIG. 9, the data transmission device 1a, which has been set to be a master at power-on, performs a master training process (step S105), and proceeds to a process of the next step S112. With reference to FIG. 14, detailed operation in the master training process is described below.

In FIG. 14, the transmission/reception section 4a in the data transmission device 1a, which has been set to be a master, generates, in the start signal generation section 67, a start signal TS which indicates a data communication start timing and is capable of setting determination levels serving as reference for data determination in relation to the downstream data transmission device 1b, and transmits the start signal TS to the transmission line 80a (step 5501). Here, the timing at which the transmission/reception section 4a starts to transmit the start signal TS is provided by the MPU 3a. Then, the transmission/reception section 4a in the data transmission device 1a, which has been set to be a master, waits for reception of the start signal TS sent from the upstream data transmission device 1f (step S502) . Note that although the timing at which the sending of the start signal TS is started has been described as being provided by the MPU 3a, the timing at which the sending of the start signal TS is started may be generated within the transmission/reception section 4a.

Here, in the case where the transmission/reception sections 4b to 4f of slaves have received the start signal TS from the respective transmission lines 80a to 80e, they immediately generate, in the start signal generation section 67 thereof, a start signal TS in relation to the downstream data transmission device 1, and transmit the start signal TS to the transmission line 80 (a detailed operation of the slaves is described further below). That is, in the case where the data communication function of the entire data transmission system works regularly, the start signal TS is sent from the upstream data transmission device 1f to the master data transmission device 1a. Therefore, in the above-described step S502, the transmission/reception section 4a of the data transmission device 1a, which has been set to be a master, is able to receive the start signal TS from the upstream data transmission device 1f. Then, the master data transmission device 1a uses the start signal TS received from the upstream data transmission device 1f to perform the setting of the determination levels in the inverse mapping section 54 thereof, and retains the determination values. Further, the master data transmission device 1a waits for a predetermined time-out period to elapse (step S503), and the process according to the present subroutine is completed.

Referring back to FIG. 9, at step S112, the MPU 3a outputs a reset signal to the controller 2a (the data link layer), and the reset state of the controller 2a is cancelled. Then, the MPU 3a outputs, to the controller 2a, a control signal for performing initial setting on the controller 2a, whereby the initialization process for the controller 2a is performed (step S113). For example, using this control signal, the MPU 3a gives instruction to perform fixed initial setting in the data transmission system, e.g., instruction as to master/slave selection by the controller 2a, or the like. Then, after completion of the process of the above-described step S113, the data transmission device 1a starts data communication with other data transmission devices 1.

On the other hand, in the case where the transmission/reception section 4a has not received the lock signal LS from the upstream data transmission device 1f at the above-described step S102 (for example, disconnection has occurred at the transmission line 80d), the data transmission device 1a performs the above-described master clock synchronization diag process again (step S106), and proceeds to a process of the next step. The master clock synchronization diag process performed at step S106 is identical to the operation of the above-described steps 5301 to S303; therefore, a detailed description thereof is omitted.

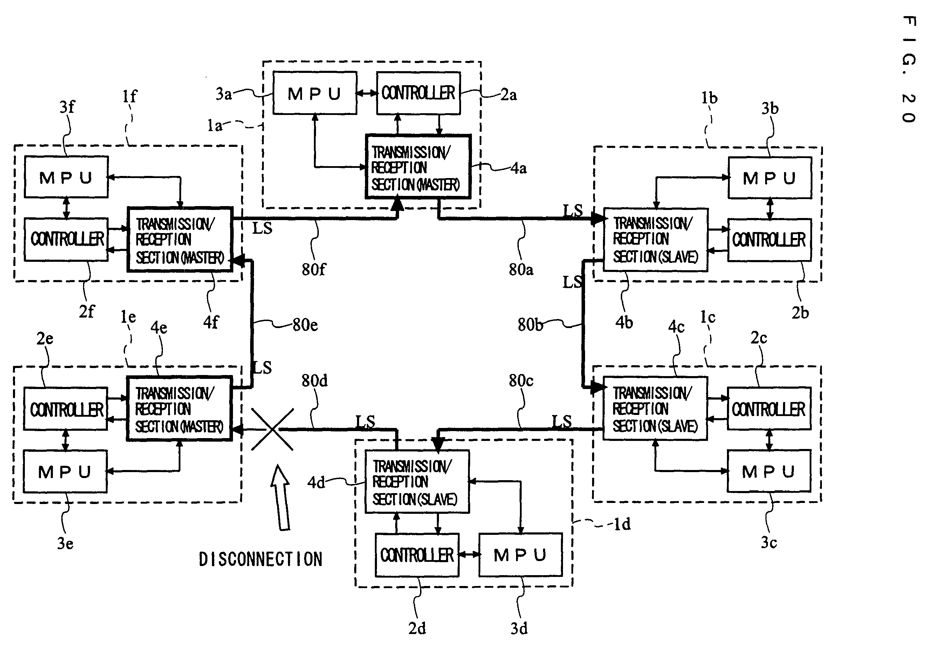

Next, the data transmission device 1a, which has been set to be a master at power-on, determines whether the transmission/reception section 4a has received the lock signal LS from the upstream data transmission device 1f (step S107). Meanwhile, the data transmission devices 1b to 1f, which have been set to be slaves at power-on, are set to be a master if they do not receive the lock signal LS from the upstream data transmission device 1 in a process of establishing a first clock synchronization. Then, a data transmission device 1 that has been set to be a master sends a lock signal LS to the downstream data transmission device 1, synchronized with the process of the above-described step S106 (see FIG. 20; detailed operation is described further below). Therefore, if the master data transmission device 1a receives the lock signal LS from the upstream data transmission device 1f, this means that the data transmission device 1a is not located most upstream, in electrical communication, from the disconnection point (the state of FIG. 20). On the other hand, if the master data transmission device 1a does not receive the lock signal LS from the upstream data transmission device 1f, this means that the data transmission device 1a is located most upstream, in electrical communication, from the disconnection point.

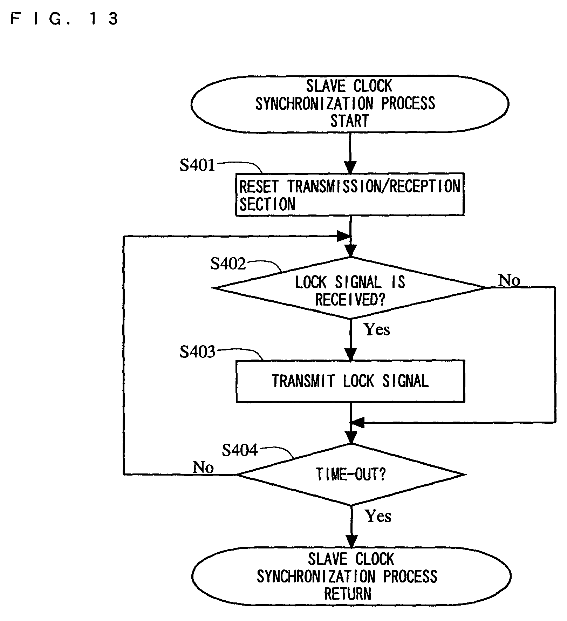

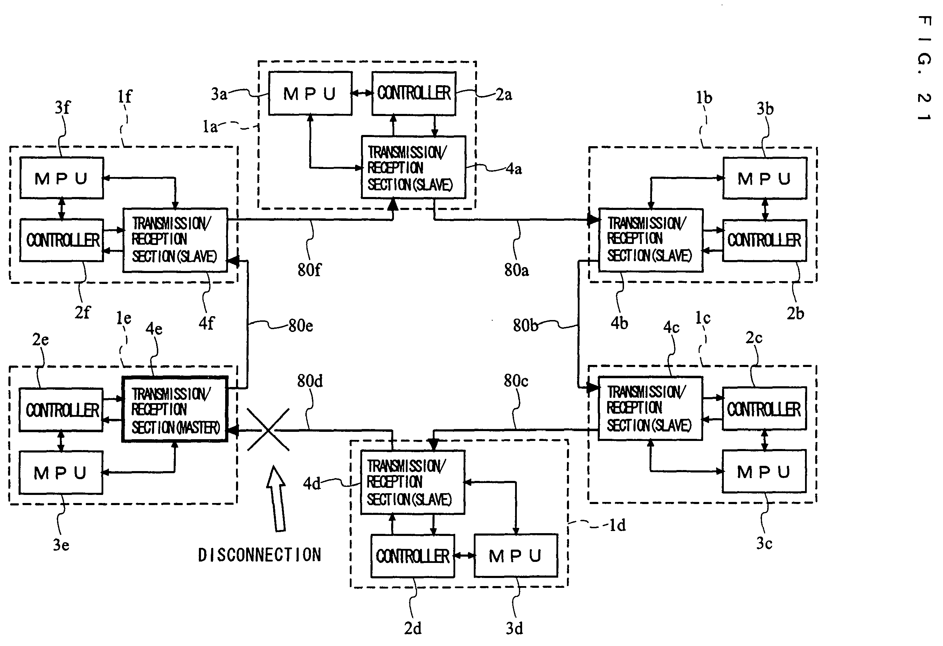

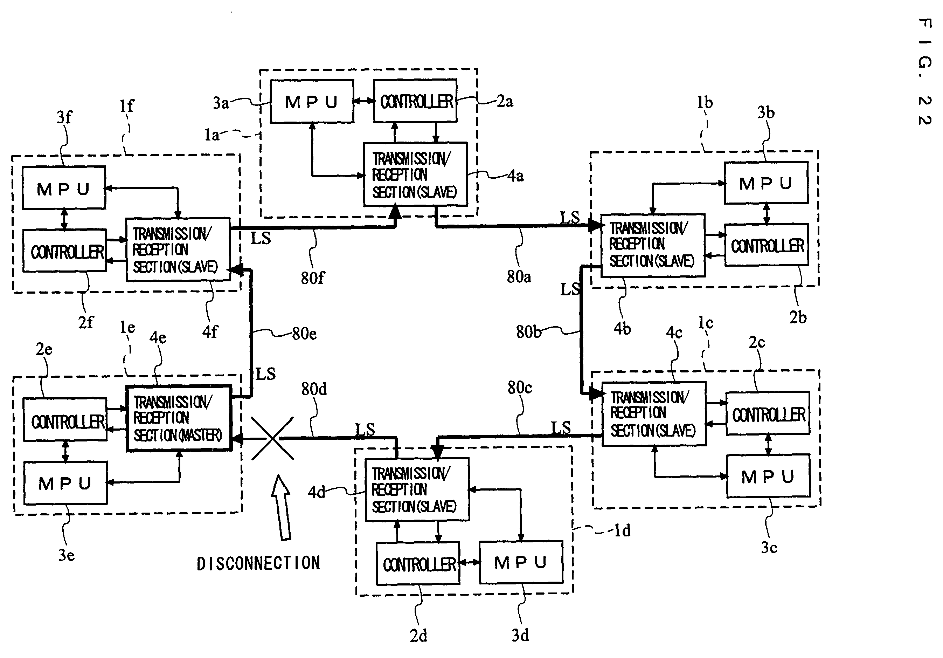

In the case where the transmission/reception section 4a receives the lock signal LS from the upstream data transmission device 1f at the above-described step S107 (i.e., the data transmission device 1a is not located most upstream, in electrical communication, from the disconnection point), the data transmission device 1a is set to be a slave (the state of FIG. 21). Then, the data transmission device 1a, which has been set to be a slave, performs a slave clock synchronization process (the state of FIG. 22; step S108), and proceeds to a process of the next step. With reference to FIG. 13, detailed operation in the slave clock synchronization process is described below. In the aforementioned step S108, the controller 2a, the MPU 3a, and the transmission/reception section 4a included in the data transmission device 1a, which has been set to be a slave, are subjected to processing; however, since another data transmission device may also be subjected to processing in the slave clock synchronization process, all structural components are collectively referred to as the data transmission device 1, the controller 2, the MPU 3, the transmission/reception section 4, and the transmission line 80 in the following description.

In FIG. 13, the MPU 3 of the data transmission device 1, which has been set to be a slave, outputs a reset signal to the transmission/reception section 4, whereby the transmission/reception section 4 is reset (step S401). In step S401, since a reset signal is not outputted to the controller 2, the controller 2 remains in a reset state (i.e., the initialization operation is not performed thereon). The transmission/reception section 4 of the slave, which has been reset at the above-described step S401, waits for reception of the lock signal LS sent from the upstream data transmission device 1 via the transmission line 80 (step S402). Then, in the case where the upstream data transmission device 1 has sent the lock signal LS, the transmission/reception section 4 of the slave performs clock recovery with the clock recovery section 56 and performs the setting of the reception PLL. Then, the transmission/reception section 4 of the slave transmits the lock signal LS to the downstream data transmission device 1 via the transmission line 80 based on the transmission PLL controlled by the clock control section 7 (step S403) .

Next, the MPU 3 and the transmission/reception section 4 subjected to processing in the above-described steps S401 to S403 wait for a predetermined time-out period to elapse (step S404), and the process according to the present subroutine is completed.

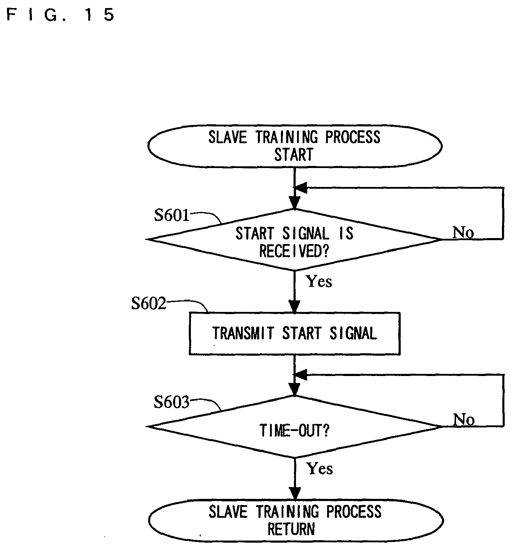

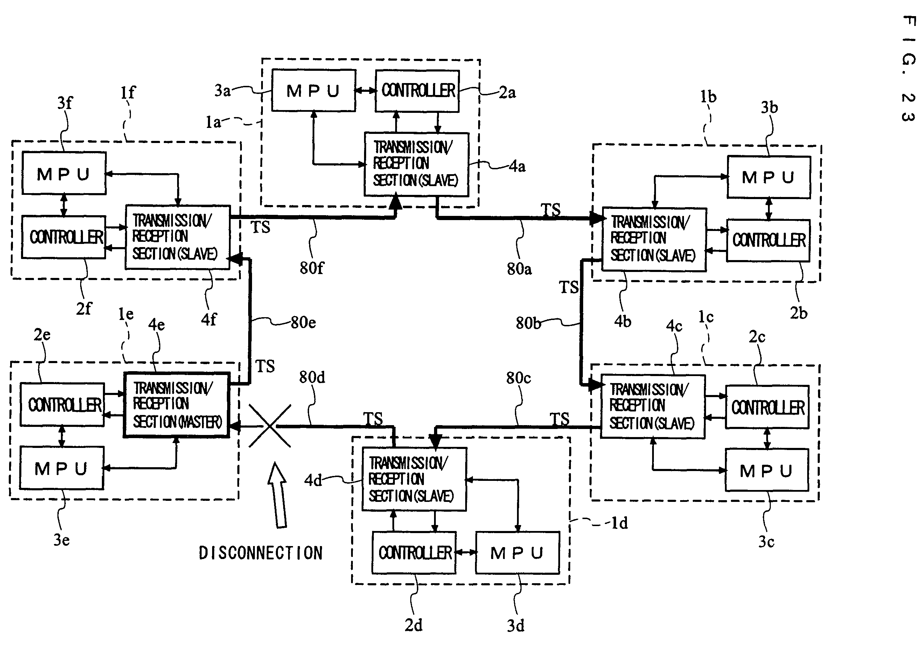

Referring back to FIG. 9, after the operation of the above-described step S108, the data transmission device 1a, which has been set to be a slave, performs a slave training process (the state of FIG. 23; step S109), and proceeds to a process of the next step S112. With reference to FIG. 15, detailed operation in the slave training process is described below. In the aforementioned step S109, the controller 2a, the MPU 3a, and the transmission/reception section 4a included in the data transmission device 1a, which has been set to be a slave, are subjected to processing; however, since another data transmission device may also be subjected to processing in the slave training process, all structural components are collectively referred to as the data transmission device 1, the controller 2, the MPU 3, the transmission/reception section 4, and the transmission line 80 in the following description.

In FIG. 15, the transmission/reception section 4 in the data transmission device 1, which has been set to be a slave, waits for reception of the start signal TS sent from the upstream data transmission device 1 (step S601). Here, since the data transmission device 1, which has been set to be a slave, is not located most upstream, in electrical communication, from the disconnection point, the start signal TS is necessarily sent from the upstream data transmission device 1. Therefore, if the start signal TS sent from the upstream data transmission device 1 is received, the transmission/reception section 4 of the slave immediately transmits a start signal TS of its own to the downstream data transmission device 1 (step S602). Further, the MPU 3 and the transmission/reception section 4 wait for a predetermined time-out period to elapse (step S603), and the process according to the present subroutine is completed. Then, the transmission/reception section 4 uses the start signal TS received from the upstream data transmission device 1 to perform the setting of the determination levels in the inverse mapping section 54, and retains the determination values.

On the other hand, in the case where the transmission/reception section 4a does not receive the lock signal LS from the upstream data transmission device 1f at the above-described stepS107 (i.e., the data transmission device 1a is located most upstream, in electrical communication, from the disconnection point), the data transmission device 1a is set to be a master again. Then, the data transmission device 1a, which has been set to be a master, performs the above-described master clock synchronization diag process (step 5110), and proceeds to a process of the next step. The master clock synchronization diag process performed at step S110 is identical to the operation in the above-described steps S301 to S303; therefore, a detailed description thereof is omitted.

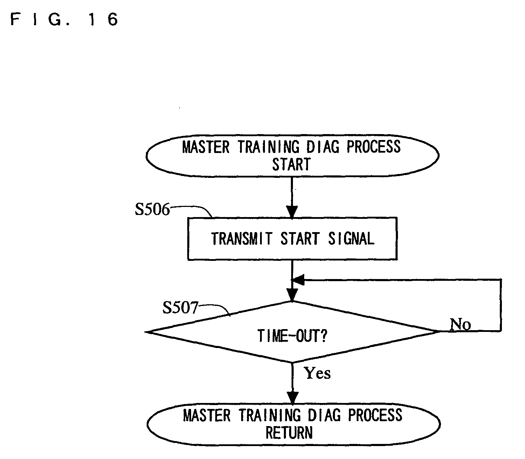

Next, the master data transmission device 1a performs the master training diag process (step S111), and proceeds to a process of the next step S112. With reference to FIG. 16, detailed operation in the master training diag process is described below. In the aforementioned step S111, the controller 2a, the MPU 3a, and the transmission/reception section 4a included in the data transmission device 1a, which has been set to be a master, are subjected to processing; however, since another data transmission device may also be subjected to processing in the master training diag process, all structural components are collectively referred to as the data transmission device 1, the controller 2, the MPU 3, the transmission/reception section 4, and the transmission line 80 in the following description.

In FIG. 16, the transmission/reception section 4 of the data transmission device 1, which has been set to be a master, generates, in the start signal generation section 67, a start signal TS which indicates a data communication start timing and is capable of setting determination levels serving as reference for data determination in relation to the downstream data transmission device 1, and transmits the start signal TS to the transmission line 80 (step S506). Here, the timing at which the transmission/reception section 4 starts to send the start signal TS is provided by the MPU 3. Alternatively, the timing at which the sending of the start signal TS is started may be generated within the transmission/reception section 4.

Next, the MPU 3 and the transmission/reception section 4, which were subjected to processing in the above-described step S506, wait for a predetermined time-out period to elapse (step S507), and the process according to the present subroutine is completed.

Next, with reference to FIG. 10, an initialization operation in data transmission devices 1 which are booted as slaves at power-on is described. First, the data transmission devices 1b to 1f connected to the data transmission system and which have been set to be slaves at power-on (see FIG. 17) perform a slave clock synchronization process (the state of FIG. 18; step S201), and proceed to a process of the next step. The slave clock synchronization process performed at step S201 is identical to the operation in the above-described steps S4 01 to 5404; therefore, a detailed description thereof is omitted.

Next, the data transmission devices 1b to 1f, which have been set to be slaves at power-on, determine whether the transmission/reception sections 4b to 4f have received the lock signal LS from the respective upstream data transmission device 1 (step S202) . At this time, the master data transmission device 1a is sending the lock signal LS to the downstream data transmission device 1b. Then, if the lock signal LS is outputted from the respective upstream data transmission device 1, each of the data transmission devices 1b to 1f, which have been set to be slaves, uses that lock signal LS to establish clock synchronization and is sending a lock signal to the downstream data transmission device 1. Therefore, in the case where clock synchronization has been established regularly between the data transmission devices 1a to 1f, each of the data transmission devices 1b to 1f receives the lock signal LS from the upstream data transmission device 1. In the case where disconnection has occurred at the transmission line 80d, each of the slaves that are located upstream from the disconnection point and downstream from the master data transmission device 1a (i.e., the data transmission devices 1b to 1d; see FIG. 18) receives the lock signal LS from the upstream data transmission device 1. Meanwhile, in the case where disconnection has occurred at the transmission line 80d, the slaves that are located upstream of the master data transmission device 1a and downstream of the disconnection point (i.e., the data transmission devices 1e and 1f; see FIG. 18) do not receive the lock signal LS from the upstream data transmission device 1.

If the lock signal LS is received from the upstream data transmission device 1 at the above-described step S202, the transmission/reception sections 4b to 4f of the slaves (e.g., the transmission/reception sections 4b to 4f in the case where clock synchronization has been established regularly; or the transmission/reception sections 4b to 4d in the case where disconnection has occurred at the transmission line 80d) further perform the above-described slave clock synchronization process twice (steps S203 and S204). The slave clock synchronization process performed at these steps S203 and S204 is identical to the operations in the above-described steps S401 to S404; therefore a detailed description thereof is omitted.

Next, the transmission/reception sections 4b to 4f of the slaves, which have gone through the operation of the above-described step S204, perform the above-described slave training process (step S205), and proceed to a process of the next step S212. The slave training process performed at this step S205 is identical to the operations in the above-described steps S601 to S603; therefore, a detailed description thereof is omitted.

At step S212, the MPUs 3b to 3f output a reset signal to the controllers 2b to 2f (the data link layer), respectively, and the reset states of the controllers 2b to 2f are cancelled. Then, the MPUs 3b to 3f output, to the controllers 2b to 2f, respectively, a control signal for performing initial setting on the controllers 2b to 2f, whereby the initialization process for the controllers 2b to 2f is performed (step S213). For example, using this control signal, the MPUs 3b to 3f give instruction to perform fixed initial setting in the data transmission system, e.g., instruction as to master/slave selection by the controllers 2b to 2f, or the like. Then, after completion of the process of the above-described step S213, each of the data transmission devices 1b to 1f starts data communication with other data transmission devices 1.

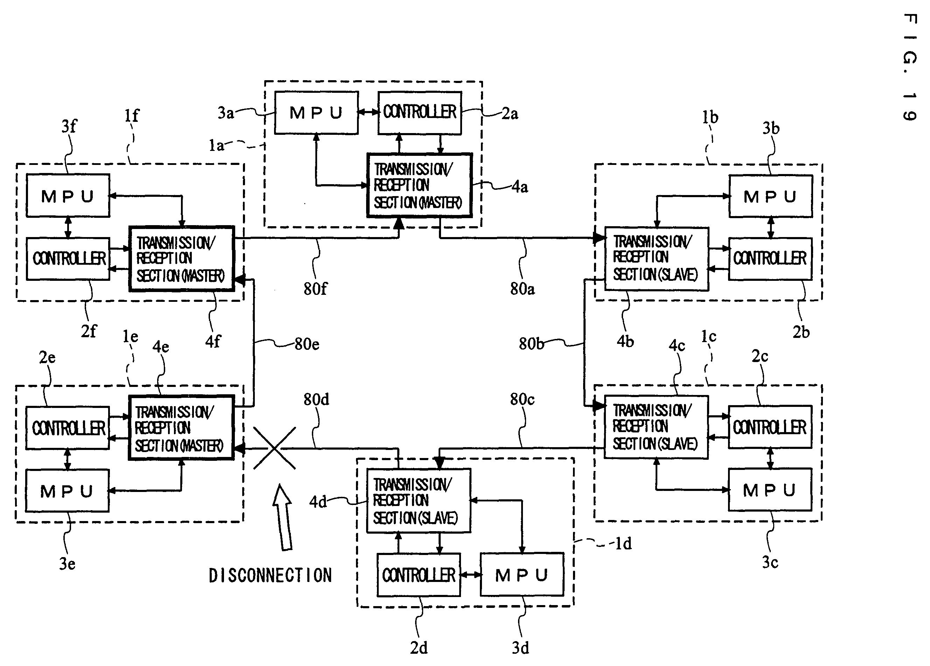

On the other hand, in the case where disconnection has occurred at the transmission line 80d, the slave data transmission devices 1e and 1f, which do not receive the lock signal LS from the upstream data transmission device 1 at the above-described step S202, are set to be masters (the state of FIG. 19). The transmission/reception sections 4e and 4f of the masters perform the above-described master clock synchronization diag process (the state of FIG. 20; step S206), and proceed to a process of the next step. The master clock synchronization diag process performed at step S206 is identical to the operations in the above-described steps 5301 to 5303; therefore, a detailed description thereof is omitted.

Next, the data transmission devices 1e and 1f determine whether the transmission/reception sections 4e and 4 f have received the lock signal LS from the respective upstream data transmission device 1 (step S207). At this time, the data transmission devices 1a, 1e, and 1f, which have been set to be masters, are sending the lock signal LS to the downstream data transmission device 1 at the above-described steps S106 and S206 (the state of FIG. 20) . Therefore, if the master data transmission devices 1e and 1f receive the lock signal LS from the upstream data transmission device 1, this means that the data transmission devices 1e and 1f are not located most upstream, in electrical communication, from the disconnection point (the data transmission device 1f in FIG. 20) . On the other hand, if the master data transmission devices 1e and 1f do not receive the lock signal LS from the upstream data transmission device 1f, this means that the data transmission devices 1e and 1f are located most upstream, in electrical communication, from the disconnection point (the data transmission device 1e in FIG. 20).

If the lock signal LS is received from the upstream data transmission device 1 at the above-described step S207, the data transmission devices 1e and 1f (e.g. , the data transmission device 1f in FIG. 20, which is not located most upstream, in electrical communication, from the disconnection point), is set to be a slave (the state of FIG. 21). Then, the data transmission device 1f, which has been set to be a slave, performs the slave clock synchronization process (the state of FIG. 22; step S208), and proceeds to a process of the next step. The slave clock synchronization process performed at this step S208 is identical to the operations in the above-described steps S401 to S404; therefore, a detailed description thereof is omitted.

Next, the transmission/reception section 4f of the slave, which has gone through the operation of the above-described step S208, performs the above-described slave training process (the state of FIG. 23; step S209), and proceeds to a process of the next step S212. The slave training process performed at this step S209 is identical to the operations in the above-described steps S601 to S603; therefore, a detailed description thereof is omitted.

On the other hand, if the lock signal LS is not received from the upstream data transmission device 1 at the above-described step S207, the data transmission device 1e (e.g., the data transmission device 1e in FIG. 20, which is located most upstream, in electrical communication, from the disconnection point), is set to be a master again. Then, the data transmission device 1e, which has been set to be a master, performs the above-described master clock synchronization diag process (the state of FIG. 22; step S210), and proceeds to a process of the next step. The master clock synchronization diag process performed at step S210 is identical to the operations in the above-described steps S301 to S303; therefore, a detailed description thereof is omitted.

Next, the master data transmission device 1e performs the master training diag process (the state of FIG. 23; step S211), and proceeds to a process of the next step S212. The master clock synchronization diag process performed at step S211 is identical to the operations in the above-described steps S506 and S507; therefore, a detailed description thereof is omitted.

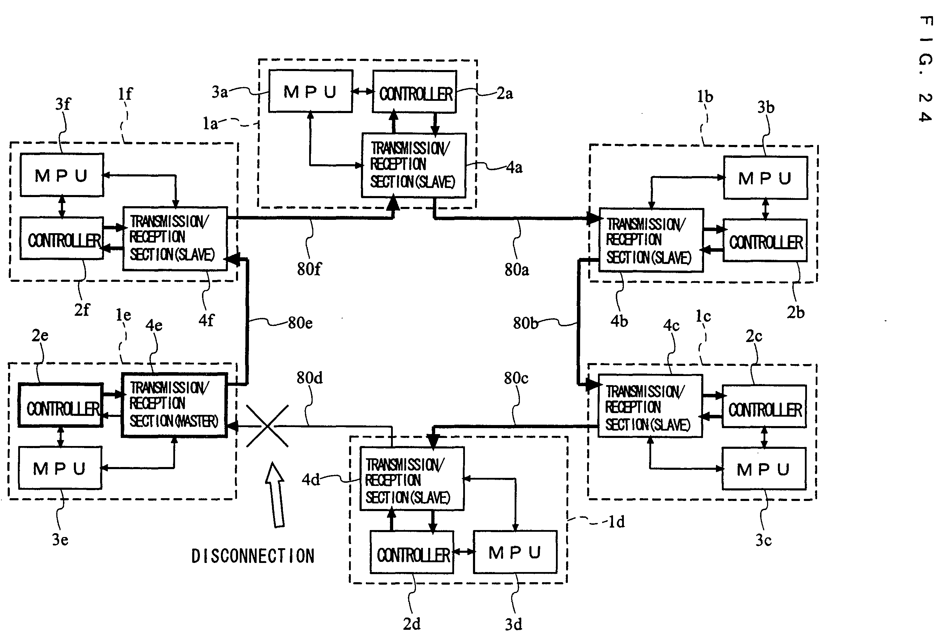

The data transmission system illustrated in FIG. 17 is initialized so as to be in a state as illustrated in FIG. 24, by performing the initialization process according to the flowcharts of the above-described FIG. 9 and FIG. 10. As illustrated in FIG. 17, in the data transmission system, the data transmission device 1a is set to be a master at power-on, and disconnection has occurred at the transmission line 80d. In this case, the data transmission device 1e, which is located most upstream, in electrical communication, from the disconnection point, is set to be a master as illustrated in FIG. 24, and then the initialization process is performed on the data link layer and the physical layer.

As described above, in the case where transmission and reception is made impossible at a certain portion because of a failure of the transmission/reception function of a data transmission device or a disconnection at a transmission line, the data transmission system according to the second embodiment performs the initialization process for the physical layer (the transmission/reception section 4) repeatedly, thereby setting as a master the data transmission device which is located most upstream in electrical communication from the disconnection point. Then, with that data transmission device being the master, the setting of the physical layer such as the clock synchronization with the other data transmission devices is established, and thereafter the initialization process for the data link layer is performed to enable subsequent data transmission and reception. That is, even in the case where transmission and reception is made impossible at a certain portion, the above-described data transmission system structured in the ring LAN is able to perform communication using transmission lines excluding the disconnection point.

Also, since the initialization process for the data link layer in the data transmission system according to the second embodiment is started after initialization processes for respective physical layers are completed, the initialization process for the data link layer in the data transmission system is performed in a situation where respective data link layers are capable of data communication therebetween. Therefore, an initialization program (an API (Application Program Interface), which is provided on the supposition that a physical layer which does not require initialization is used) which has been designed to be used in a situation where the physical layer allows communication in an initialization period of the data link layer can be applied to the data transmission system which performs mutual electrical communication with that prerequisite being satisfied. In other words, the initialization process for data communication can be performed while preventing an unpredictable trouble resulting from the use of the afore mentioned initialization program in the data transmission system. In addition, modification related to the initialization period of the physical layer is not required when applying the initialization program to the data transmission system. Therefore, development cost will not be increased.

Also in the second embodiment, in the case where electrical communication is impossible at a portion of the data transmission system, a data transmission device 1 which does not receive the lock signal LS in the above-described operation of the data transmission system (e.g., "No" is selected at the above-described stepS107orS207) is finally set as a master. However, the master may be set in a different manner. For example, a data transmission device 1 which cannot establish clock synchronization by using the clock recovery section 56 thereof to perform clock recovery and performing the setting of the reception PLL may be set as a master. Alternatively, a data transmission device 1 which does not receive the start signal TS may be set as a master.

### INDUSTRIAL APPLICABILITY

A data transmission system, a data transmission device, and a method therefor according to the present invention are capable of communication using transmission lines excluding a damaged point even in the case where transmission and reception is made impossible at a certain portion as a result of a disconnection of a transmission line or a failure of the transmission and reception function, and are usable for a data transmission system structured in a ring LAN or the like, for example.

## Claims

1. A data transmission system including a plurality of data transmission devices connected via a transmission line so as to form a ring structure, for performing unidirectional electrical communication after each of the data transmission devices establishes clock synchronization, wherein,
each of the data transmission devices includes:
a processing section for processing data received and to be transmittedbased on a predetermined communications protocol;
a transmission/reception section for outputting data received from a previous data transmission device to the processing section and transmitting a processing result from the processing section to a subsequent data transmission device;
a control section for setting the device as a master, which sends a signal synchronizing with a held reference clock to the subsequent data transmission device, or as a slave, which establishes clock synchronization using a signal received from the previous data transmission device and sends a signal to the subsequent data transmission device;
lock signal sending means for sending a lock signal in an initial operation;
clock synchronization means for receiving the lock signal sent by the previous data transmission device and establishing the clock synchronization;
start signal sending means for sending a start signal that indicates a data communication start timing;
start signal commencement timing generation means for, when the device is set as the master, outputting to the start signal sendingmeans a start signal sending commencement signal indicating a timing at which to send the start signal, after a predetermined time period elapses after the lock signal sending means sends the lock signal; and
a signal detection section for detecting whether a signal has been received from the previous data transmission device,
the lock signal sending means
when the device is set as the master, sends to the subsequent data transmission device the lock signal synchronizing with the held reference clock, and
when the device is set as the slave, receives the lock signal sent by the previous data transmission device and establishes clock synchronization, and, after establishing the clock synchronization, sends the lock signal further to the subsequent data transmission device, and
the start signal sending means
when the device is set as the master, receives the start signal sending commencement signal from the start signal commencement timing generation means and thereafter sends the start signal to the subsequent data transmission device, and
when the device is set as the slave, sends the start signal to the subsequent data transmission device in response to reception of the start signal sent from the previous data transmission device,
whereby each of the data transmission devices performs initialization.

2. The data transmission system according to claim 1, wherein
the control section sets the device as a master or a slave based on a presence or absence of a signal detection in the signal detection section,
whereby, when there is a portion where the electrical communication is impossible, a data transmission device located most upstream in the electrical communication from the portion is set as the master.

3. The data transmission system according to claim 2, wherein,
the control section
when the device is set as the master in the initial operation, causes the lock signal sending means to send the lock signal and, after recognizing that the signal detection section has not detected a signal from the previous data transmission device within a predetermined time period, sets the device as a slave if the signal detection section of the device detects a signal from the previous data transmission device and sets the device as a master if the signal detection section of the device does not detect a signal from the previous data transmission device, and
when the device is set as the slave in the initial operation, sets the device as a slave if the signal detection section of the device detects a signal from the previous data transmission device and sets the device as a master if the signal detection section of the device does not detect a signal from the previous data transmission device.

4. The data transmission system according to claim 2, wherein,
the control section includes:
first shifting means for, when the device is set as the master in the initial operation, causing the lock signal sending means to send the lock signal and, in response to the signal detection section not detecting a signal from the previous data transmission device within a predetermined time period, setting the device as the master and performing shift to a first diag mode;
second shifting means for, when the device is set as the slave in the initial operation, setting the device as the master and performing the shift to the first diag mode in response to the signal detection section not detecting a signal from the previous data transmission device within a predetermined time period;
third shifting means for, when the device is set as the slave in the initial operation, setting the device as the slave and performing the shift to the first diag mode in response to the signal detection section detecting a signal from the previous data transmission device within a predetermined time period;
fourth shifting means for, when the device is set as the master in the first diag mode, causing the lock signal sending means to send the lock signal and, in response to the signal detection section detecting a signal from the previous data transmission device during the first diag mode, setting the device as the slave and performing shift to a second diag mode;
fifth shifting means for, when the device is set as the master in the first diag mode, causing the lock signal sending means to send the lock signal and, in response to the signal detection section not detecting a signal from the previous data transmission device, setting the device as the master and performing the shift to the second diag mode; and
sixth shifting means for, when the device is set as the slave in the first diag mode, setting the device as the slave and performing the shift to the second diag mode, and
in the second diag mode,
the lock signal sending means
when the device is set as the master, sends to the subsequent data transmission device the lock signal synchronizing with the held reference clock, and
when the device is set as the slave, receives the lock signal sent by the previous data transmission device and establishes clock synchronization and, after establishing the clock synchronization, sends the lock signal further to the subsequent data transmission device, and
the start signal sending means
when the device is set as the master, receives the start signal sending commencement signal from the start signal commencement timing generation means and there after sends the start signal to the subsequent data transmission device, and
when the device is set as the slave, sends the start signal to the subsequent data transmission device in response to reception of the start signal sent from the previous data transmission device.

5. The data transmission system according to claim 4, wherein,
the control section further includes:
seventh shifting means for, when the device is set as the master in the initial operation, causing the lock signal sending means to send the lock signal and, in response to the signal detection section detecting a signal from the previous data transmission device within a predetermined time period, setting the device as the master and performing shift to a third diag mode; and
eighth shifting means for, when the device is set as the master in the third diag mode, causing the lock signal sending means to send the lock signal, setting the device as the master, and performing the shift to the second diag mode.

6. The data transmission system according to claim 5, wherein the signal detection section performs signal detection based on a presence or absence of the lock signal received from the previous data transmission device.

7. The data transmission system according to claim 5, wherein the signal detection section performs signal detection based on a presence or absence of establishment of the clock synchronization in the device.

8. The data transmission system according to claim 5, wherein the signal detection section performs signal detection based on a presence or absence of the start signal received from the previous data transmission device.

9. The data transmission system according to claim 2, wherein the communications protocol used by the processing section is defined by MOST (Media Oriented Systems Transport).

10. The data transmission system according to claim 5, wherein the processing section includes count means for counting a number of positional stages in relation to the data transmission device which is set as the master.

11. A data transmission method, in which a plurality of nodes are connected via a transmission line so as to form a ring structure, for performing unidirectional electrical communication after each of the nodes establishes clock synchronization using a predetermined communications protocol, the method comprising:
a step for setting one of the plurality of nodes as a master, which holds a reference clock, and setting another node as a slave;
a first lock signal sending step for, when the node is set as the master, sending to a subsequent node a lock signal synchronizing with the reference clock;
a clock synchronization step for establishing the clock synchronization using the lock signal sent from a previous node;
a second lock signal sending step for the node which is set as the slave establishing the clock synchronization and thereafter sending the lock signal to the subsequent node; and
a start signal sending step for sending, from the node, a start signal that indicates a data communication start timing,
the setting step, the first lock signal sending step, the clock synchronization step, the second lock signal sending step, and the start signal sending step being performed in an initial operation, wherein,
the node which is set as the master performs the start signal sending step after a predetermined time period elapses after the first lock signal sending step is performed, and
the node which is set as the slave performs the start signal sending step in response to reception of the start signal from the previous node,
whereby each of the nodes performs initialization.

12. The data transmission method according to claim 11, further comprising a resetting step for resetting the node as the master or slave based on a presence or absence of a signal received from the previous node,
whereby, when there is a portion where the electrical communication is impossible, a node located most upstream in the electrical communication from the portion is finally set as the master, and clock synchronization with another node is established.

13. The data transmission method according to claim 12, wherein,
the resetting step causes the first lock signal sending step to be performed in the initial operation, and
the resetting step includes:
a step for, after it is recognized that the node which has been set as the master in the initial operation has not detected a signal from the previous node within a predetermined time period, setting as a slave a node which has detected a signal from the previous node, and setting as a master a node which has not detected a signal from the previous node; and
a step, performed by the node which has been set as the slave in the initial operation, for setting as a slave a node which has detected a signal from the previous node, and setting as a master a node which has not detected a signal from the previous node.

14. The data transmission method according to claim 12, wherein,
the resetting step includes:
a first shifting step performed after the first lock signal sending step is performed, for, in response to the node which has been set as the master not detecting a signal from the previous node within a predetermined time period, setting the node as the master and performing shift to a first diag mode;
a second shifting step for setting, of nodes which have been set as slaves, a node which has not detected a signal from the previous node within a predetermined time period as the master and performing the shift to the first diag mode;
a third shifting step for setting, of the nodes which have been set as slaves, a node which has detected a signal from the previous node within the predetermined time period as the slave and performing the shift to the first diag mode;
a step, performed by the node which has been set as the master, for sending the lock signal to the subsequent node;
a fourth shifting step for setting, of nodes which have been set as the master, a node which has detected a signal from the previous node as the slave and performing shift to a second diag mode;
a fifth shifting step for setting, of the nodes which have been set as the master, a node which has not detected a signal from the previous node as the master and performing the shift to the second diag mode; and
a sixth shifting step for setting the node which has been set as the slave as the slave and performing the shift to the second diag mode,
the first shifting step, the second shifting step, and the third shifting step being performed in the initial operation, and
the step of sending the lock signal, the fourth shifting step, the fifth shifting step, and the sixth shifting step being performed in the first diag mode, and
in the second diag mode,
the first lock signal sending step, the clock synchronization step, and the second lock signal sending step are performed,
the node which has been set as the master performs the start signal sending step after a predetermined time period elapses after the first lock signal sending step is performed, and
the node which has been set as the slave performs the start signal sending step in response to reception of the start signal from the previous node.

15. The data transmission method according to claim 14, wherein
the resetting step further includes:
a seventh shifting step, performed in the initial operation after the first lock signal sending step is performed, for, in response to the node which has been set as the master detecting a signal from the previous node within a predetermined time period, setting the node as the master and performing shift to a third diag mode; and
an eighth shifting step, performed in the third diag mode by the node which has been set as the master, for sending the lock signal to the subsequent node, setting the node as the master, and performing the shift to the second diag mode.

16. The data transmission method according to claim 15, wherein the resetting step resets a node as the master or slave based on a presence or absence of detection of the lock signal received from the previous node.

17. The data transmission method according to claim 15, wherein the resetting step resets a node as the master or slave based on a presence or absence of establishment of the clock synchronization in the node.

18. The data transmission method according to claim 15, wherein the resetting step resets a node as the master or slave based on a presence or absence of detection of the start signal received from the previous node.

19. The data transmission method according to claim 12, wherein the communications protocol used by the nodes is defined by MOST (Media Oriented Systems Transport).

20. The data transmission method according to claim 15, further comprising a step for counting a number of positional stages in relation to the node which is set as the master, with respect to each of the nodes.

21. A data transmission device connected to a ring-shaped data transmission system for establishing clock synchronization with another device and performing unidirectional electrical communication via a transmission line, the data transmission device comprising:
a processing section for processing data received and to be transmitted based on a predetermined communications protocol;
a transmission/reception section for outputting data received from a previous device to the processing section and transmitting a processing result from the processing section to a subsequent device;
a control section for setting the device as a master, which sends a signal synchronizing with a held reference clock to the subsequent device, or as a slave, which establishes clock synchronization using a signal received from the previous device and sends a signal to the subsequent device;
lock signal sending means for sending a lock signal in an initial operation;
clock synchronization means for receiving the lock signal sent by the previous device and establishing the clock synchronization;
start signal sending means for sending a start signal that indicates a data communication start timing;
start signal commencement timing generation means for, when the device is set as the master, outputting to the start signal sending means a start signal sending commencement signal indicating a timing at which to send the start signal, after a predetermined time period elapses after the lock signal sending means sends the lock signal; and
a signal detection section for detecting whether a signal has been received from the previous device, wherein,
the lock signal sending means
when the device is set as the master, sends to the subsequent device the lock signal synchronizing with the held reference clock, and
when the device is set as the slave, receives the lock signal sent by the previous device to establish clock synchronization, and, after establishing the clock synchronization, sends the lock signal further to the subsequent device, and
the start signal sending means
when the device is set as the master, receives the start signal sending commencement signal from the start signal commencement timing generationmeans and thereafter sends the start signal to the subsequent device, and
when the device is set as the slave, sends the start signal to the subsequent device in response to reception of the start signal sent from the previous device.

22. The data transmission device according to claim 21, wherein
the control section sets the device as a master or a slave based on a presence or absence of a signal detection in the signal detection section,
whereby, if there is a portion where the electrical communication is impossible in the data transmission system, and the device is located most upstream in the electrical communication from the portion, the device is set as the master.

23. The data transmission device according to claim 22, wherein,
the control section
when the device is set as the master in the initial operation, causes the lock signal sending means to send the lock signal and, after recognizing that the signal detection section has not detected a signal from the previous device within a predetermined time period, sets the device as a slave if the signal detection section of the device detects a signal from the previous device and sets the device as a master if the signal detection section of the device does not detect a signal from the previous device, and
when the device is set as the slave in the initial operation, sets the device as a slave if the signal detection section of the device detects a signal from the previous device and sets the device as a master if the signal detection section of the device does not detect a signal from the previous device.

24. The data transmission device according to claim 22, wherein,
the control section includes:
first shifting means for, when the device is set as the master in the initial operation, causing the lock signal sending means to send the lock signal and, in response to the signal detection section not detecting a signal from the previous device within a predetermined time period, setting the device as the master and performing shift to a first diag mode;
second shifting means for, when the device is set as the slave in the initial operation, setting the device as the master and performing the shift to the first diag mode in response to the signal detection section not detecting a signal from the previous device within a predetermined time period;
third shifting means for, when the device is set as the slave in the initial operation, setting the device as the slave and performing the shift to the first diag mode in response to the signal detection section detecting a signal from the previous device within a predetermined time period;
fourth shifting means for, when the device is set as the master in the first diag mode, causing the lock signal sending means to send the lock signal and, in response to the signal detection section detecting a signal from the previous device during the first diag mode, setting the device as the slave and performing shift to a second diag mode;
fifth shifting means for, when the device is set as the master in the first diag mode, causing the lock signal sending means to send the lock signal and, in response to the signal detection section not detecting a signal from the previous device, setting the device as the master and performing the shift to the second diag mode; and
sixth shifting means for, when the device is set as the slave in the first diag mode, setting the device as the slave and performing the shift to the second diag mode, and
in the second diag mode,
the lock signal sending means
when the device is set as the master, sends to the subsequent device the lock signal synchronizing with the held reference clock, and
when the device is set as the slave, receives the lock signal sent by the previous device and establishes clock synchronization and,after establishingthe.clocksynchronization, sends the lock signal further to the subsequent device, and
the start signal sending means
when the device is set as the master, receives the start signal sending commencement signal from the start signal commencement timing generation means and thereafter sends the start signal to the subsequent device, and
when the device is set as the slave, sends the start signal to the subsequent device in response to reception of the start signal sent from the previous device.

25. The data transmission device according to claim 24, wherein,
the control section further includes:
seventh shifting means for, when the device is set as the master in the initial operation, causing the lock signal sending means to send the lock signal and, in response to the signal detection section detecting a signal from the previous device within a predetermined time period, setting the device as the master and performing shift to a third diag mode; and
eighth shifting means for, when the device is set as the master in the third diag mode, causing the lock signal sending means to send the lock signal, setting the device as the master, and performing the shift to the second diag mode.

26. The data transmission device according to claim 25, wherein the signal detection section performs signal detection based on a presence or absence of the lock signal received from the previous device.

27. The data transmission device according to claim 25, wherein the signal detection section performs signal detection based on a presence or absence of establishment of the clock synchronization in the device.

28. The data transmission device according to claim 25, wherein the signal detection section performs signal detection based on a presence or absence of the start signal received from the previous device.

29. The data transmission device according to claim 22, wherein the communications protocol used by the processing section is defined by MOST (Media Oriented Systems Transport).
